(19) Europäisches Patentamt
European Patent Office
Office européen des brevets

(11) **EP 1 840 630 A1**

(12) **EUROPEAN PATENT APPLICATION**
published in accordance with Art. 158(3) EPC

(43) Date of publication:
**03.10.2007 Bulletin 2007/40**

(51) Int Cl.:
*G02B 27/62* (2006.01)     *G02B 27/42* (2006.01)
*G02B 7/00* (2006.01)

(21) Application number: **05703721.0**

(22) Date of filing: **17.01.2005**

(86) International application number:
**PCT/JP2005/000484**

(87) International publication number:
**WO 2006/075400 (20.07.2006 Gazette 2006/29)**

(84) Designated Contracting States:
**FR**

(71) Applicant: **MITSUBISHI DENKI KABUSHIKI KAISHA**
**Chiyoda-ku, Tokyo 100-8310 (JP)**

(72) Inventors:
- **SEKI, Kouji,**
  **Mitsubishi Denki Kabushiki Kaisha**
  **Tokyo 100-8310 (JP)**
- **SUZUKI, Jiro,**
  **Mitsubishi Denki Kabushiki Kaisha**
  **Tokyo 100-8310 (JP)**
- **HIRANO, Yoshihito,**
  **Mitsubishi Denki K. K.**
  **Tokyo 100-8310 (JP)**
- **EZAKI, Yutaka,**
  **Mitsubishi Denki Kabushiki Kaisha**
  **Tokyo 100-8310 (JP)**

- **HORIUCHI, Yasushi,**
  **Mitsubishi Denki K. K.**
  **Tokyo 100-8310 (JP)**
- **TABATA, Masaki,**
  **Mitsubishi Denki Kabushiki Kaisha**
  **Tokyo 100-8310 (JP)**
- **NAMURA, Kouji,**
  **Mitsubishi Denki Kabushiki Kaisha**
  **Tokyo 100-8310 (JP)**
- **MIKAMI, Izumi,**
  **Mitsubishi Denki Kabushiki Kaisha**
  **Tokyo 100-8310 (JP)**

(74) Representative: **Domenego, Bertrand et al**
**Cabinet Lavoix**
**2, place d'Estienne d'Orves**
**75441 Paris Cedex 09 (FR)**

(54) **SEGMENT GRATING ALIGNMENT DEVICE**

(57) A grating alignment device performs alignment of two or more plane gratings so as to eliminate an angular misalignment and a phase misalignment which are caused between respective diffracted light beams generated when incident light is diffracted by the plane gratings. Specifically, alignment is performed by appropriately adjusting an angle A, an angle B, an angle C, a coordinate Z, and a coordinate X of the second plane grating so as to eliminate at least one of the angular misalignment and the phase misalignment which are caused between the respective diffracted light beams generated when incident light is diffracted by the first plane grating and the second plane grating.

FIG. 1

**Description**

Technical Field

The present invention relates to a segmented grating alignment device for aligning two or more reflection plane gratings (hereinafter, each referred to as "plane grating") so as to eliminate an angular misalignment and a phase misalignment which are caused between diffracted light beams generated when incident light is diffracted by the respective plane gratings.

Background Art

In a field in which a high-intensity laser beam is used, in order to prevent the damage of an optical system at the time of propagation of laser light, it is necessary to limit a propagated laser light intensity per unit area of cross section. Therefore, laser light whose beam diameter is large is employed. When a plane grating is to be used at the time of propagation of laser light, it is necessary to use a large-area plane grating.

A method of producing a single large plane grating is used as a conventional example of an apparatus for realizing the large-area plane grating. For example, there is an apparatus for producing the single large plane grating using two replicas (see, for example, Non Patent Document 1).

Non Patent Document 1: Christopher Palmer, Diffraction Gating Handbook fifth edition, Spectra Physics Richardson Grating Laboratory, 2002, February, pp. 151-153

Disclosure of the Invention

Problems to be solved by the Invention

The conventional large-area plane grating is constructed as described above. However, the method of producing the single large plane grating using two or more replicas has a problem in that the technical difficulty of aligning relative angles and relative positions which are caused between respective replicas increases as the number of replicas to be used increases. In addition, the single large plane grating produced as described above has a problem in that the plane grating is deformed by the effect of heat to reduce the surface accuracy of the plane grating.

In order to solve the problems, a method of arranging two or more small-area plane gratings to obtain the same performance as that of the large-area plane grating may be effective. However, this method has a problem in that it is necessary to use a segmented grating alignment device for performing alignment so as to eliminate an angular misalignment and a phase misalignment which are caused between diffracted light beams generated when incident light is diffracted by the respective plane gratings.

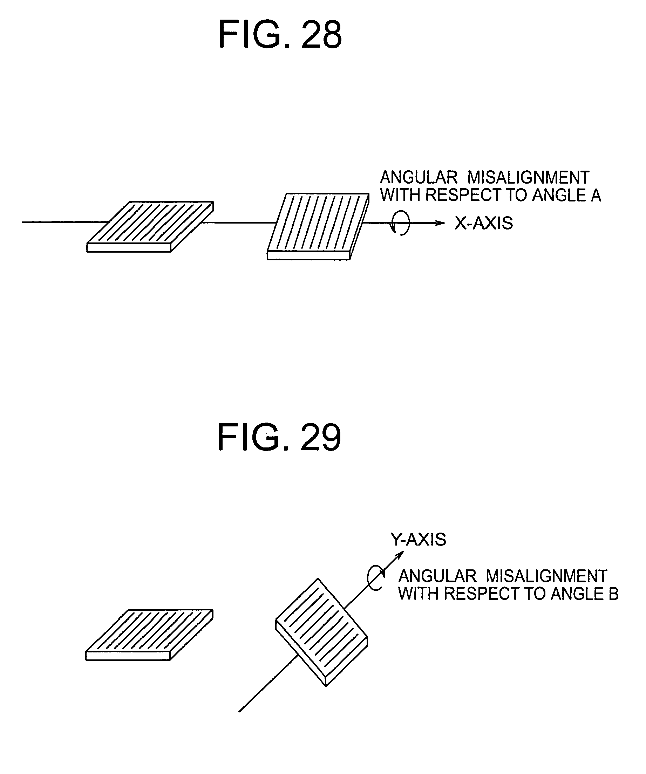

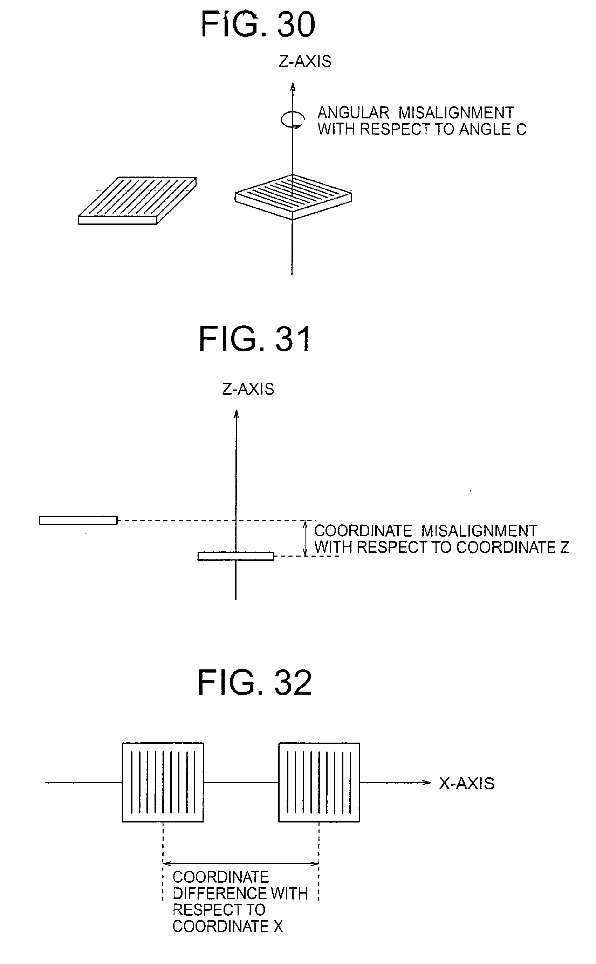

FIG. 28 shows an angular misalignment between two plane gratings with respect to an angle (hereinafter, referred to as "angle A") corresponding to rotation about an axis (hereinafter, referred to as "X-axis") perpendicular to a groove direction of the plane gratings within a diffraction plane of the plane gratings. FIG. 29 shows an angular misalignment between two plane gratings with respect to an angle (hereinafter, referred to as "angle B") corresponding to rotation about an axis (hereinafter, referred to as "Y-axis") parallel to the groove direction of the plane gratings within the diffraction plane of the plane gratings. FIG. 30 shows an angular misalignment between two plane gratings with respect to an angle (hereinafter, referred to as "angle C") corresponding to rotation about an axis (hereinafter, referred to as "Z-axis") perpendicular to the diffraction plane of the plane gratings. An angular misalignment between the two plane gratings with respect to each of the angle A, the angle B, and the angle C causes an angular misalignment between diffracted light beams generated when incident light is diffracted by the two plane gratings.

FIG. 31 shows a coordinate misalignment between Z-axis direction coordinates (hereinafter, each referred to as "coordinate Z") of two plane gratings. FIG. 32 shows a coordinate difference between X-axis direction coordinates (hereinafter, each referred to as "coordinate X") of two plane gratings. The coordinate misalignment between the coordinates Z of the two plane gratings and the coordinate difference between the coordinates X thereof cause a phase misalignment between diffracted light beams generated when incident light is diffracted by the two plane gratings.

The present invention has been made to solve the above-mentioned problems and a first object of the present invention is to obtain a segmented grating alignment device capable of performing adjustment so as to eliminate an angular misalignment between diffracted light beams generated when incident light is diffracted by two or more plane gratings, which is caused by an angular misalignment between the respective plane gratings with respect to each of an angle A, an angle B, and an angle C.

In addition, the present invention has been made to solve the above-mentioned problems and a second object of the present invention is to obtain a segmented grating alignment device capable of performing adjustment so as to eliminate a phase misalignment between diffracted light beams generated when incident light is diffracted by two or more plane gratings, which is caused by a coordinate misalignment between coordinates Z of the plane gratings and a coordinate difference between coordinates X thereof.

Means for solving the Problems

A segmented grating alignment device according to the present invention includes a grating alignment device for performing alignment so as to eliminate at least one of an angular misalignment and a phase misalignment which are caused between respective diffracted light beams generated when incident light is diffracted by two plane gratings.

Effects of the Invention

The segmented grating alignment device according to the present invention has an effect capable of performing adjustment so as to eliminate the angular misalignment between diffracted light beams generated when incident light is diffracted by the two or more plane gratings, which is caused by the angular misalignment between the respective plane gratings with respect to each of an angle A, an angle B, and an angle C. In addition, the segmented grating alignment device according to the present invention has an effect capable of performing adjustment so as to eliminate an phase misalignment between diffracted light beams generated when incident light is diffracted by two or more plane gratings, which is caused by a coordinate misalignment between coordinates Z of the plane gratings and a coordinate difference between coordinates X thereof.

Brief Description of the Drawings

FIG. 1 shows a structure of a segmented grating alignment device according to Embodiment 1 of the present invention.
FIG. 2 shows a structure of a segmented grating alignment device according to Embodiment 2 of the present invention.
FIG. 3 shows a structure of a segmented grating alignment device according to Embodiment 3 of the present invention.
FIG. 4 shows a structure of a segmented grating alignment device according to Embodiment 4 of the present invention.
FIG. 5 shows a structure of a segmented grating alignment device according to Embodiment 5 of the present invention.
FIG. 6 shows a structure of a segmented grating alignment device according to Embodiment 6 of the present invention.
FIG. 7 shows a relationship between a traveling direction of incident light incident on a plane grating and a traveling direction of diffracted light generated when the incident light is diffracted by the plane grating.
FIG. 8 shows results obtained by plotting an angular misalignment dD [$\mu$rad] between first-order diffracted light beams generated when an angle A of one of two plane gratings is changed by dA [$\mu$rad], an XZ-in-plane component dDin [$\mu$rad] thereof, and an XZ-out-of-plane component dDout [$\mu$rad] thereof, relative to a case where all an angle A, an angle B, and an angle C of one of the plane gratings are equal to those of the other thereof.
FIG. 9 shows results obtained by plotting an angular misalignment dD [$\mu$rad] between first-order diffracted light generated when the angle B of one of the two plane gratings is changed by dB [$\mu$rad], an XZ-in-plane component dDin [$\mu$rad] thereof, and an XZ-out-of-plane component dDout [$\mu$rad] thereof, relative to the case where all the angle A, the angle B, and the angle C of one of the plane gratings are equal to those of the other thereof.
FIG. 10 shows results obtained by plotting an angular misalignment dD [prad] between first-order diffracted light beams generated when the angle C of one of the two plane gratings is changed by dC [$\mu$rad], an XZ-in-plane component dDin [$\mu$rad] thereof, and an XZ-out-of-plane component dDout [$\mu$rad] thereof, relative to the case where all the angle A, the angle B, and the angle C of one of the plane gratings are equal to those of the other thereof.
FIG. 11 shows a result obtained by plotting values of dA [$\mu$rad] and dB [$\mu$rad] which are capable of eliminating an angular misalignment between respective first-order diffracted light beams by adjustment of the angle A and the angle B when the angles C of the two plane gratings are different from each other by dC [$\mu$rad].
FIG. 12 shows results obtained by plotting an angular misalignment dD [$\mu$rad] between respective first-order diffracted light beams at each of incident light wavelength components of 1050 [nm] and 1056 [nm], an XZ-in-plane component dDin [$\mu$rad] thereof, and an XZ-out-of-plane component dDout [$\mu$rad] thereof in a case where an angular misalignment between first-order diffracted light beams at an incident light wavelength component of 1053 [nm] is eliminated.
FIG. 13 shows a structure of a segmented grating alignment device according to Embodiment 7 of the present invention.
FIG. 14 shows a structure of a segmented grating alignment device according to Embodiment 8 of the present invention.
FIG. 15 shows a structure of a segmented grating alignment device according to Embodiment 9 of the present invention.
FIG. 16 shows a result obtained by plotting a phase misalignment dP [rad] between first-order diffracted light beams relative to a coordinate misalignment dZ [μm] between coordinates Z in a case where a coordinate difference dX between coordinates X of two plane gratings is set to 0.

FIG. 17 shows a result obtained by plotting the phase misalignment dP [rad] between the first-order diffracted light beams relative to a value dX/D obtained by normalizing the coordinate difference dX [μm] between coordinates X by a plane grating groove interval D [μm] in a case where the coordinate misalignment dZ between the coordinates Z of two plane gratings is set to 0.

FIG. 18 shows a result obtained by plotting the coordinate misalignment dZ capable of eliminating a phase misalignment caused by the coordinate difference dX at a wavelength component of 1053 [nm] and a result obtained by plotting the phase misalignment dP between the respective first-order diffracted light beams at each of incident light wavelength components of 1050 [nm] and 1056 [nm] in a case where the coordinate difference dX and the coordinate misalignment dZ are selected.

FIG. 19 shows a structure of a segmented grating alignment device according to Embodiment 10 of the present invention.

FIG. 20 shows a structure of a segmented grating alignment device according to Embodiment 11 of the present invention.

FIG. 21 shows a structure of a segmented grating alignment device according to Embodiment 12 of the present invention.

FIG. 22 shows a structure of a segmented grating alignment device according to Embodiment 13 of the present invention.

FIG. 23 shows a structure of a segmented grating alignment device according to Embodiment 14 of the present invention.

FIG. 24 shows a structure of a segmented grating alignment device according to Embodiment 15 of the present invention.

FIG. 25 shows a structure of a segmented grating alignment device according to Embodiment 16 of the present invention.

FIG. 26 shows a structure of a segmented grating alignment system according to Embodiment 17 of the present invention.

FIG. 27 shows a structure of a pulse compression device according to Embodiment 18 of the present invention.

FIG. 28 shows an angular misalignment with respect to an angle A corresponding to rotation about an X-axis.

FIG. 29 shows an angular misalignment with respect to an angle B corresponding to rotation about a Y-axis.

FIG. 30 shows an angular misalignment with respect to an angle C corresponding to rotation about a Z-axis.

FIG. 31 shows a coordinate misalignment between coordinates Z in a Z-axis direction.

FIG. 32 shows a coordinate difference between coordinates X in an X-axis direction.

Best Mode for carrying out the Invention

Hereinafter, Embodiments 1 to 18 will be described.

Embodiment 1

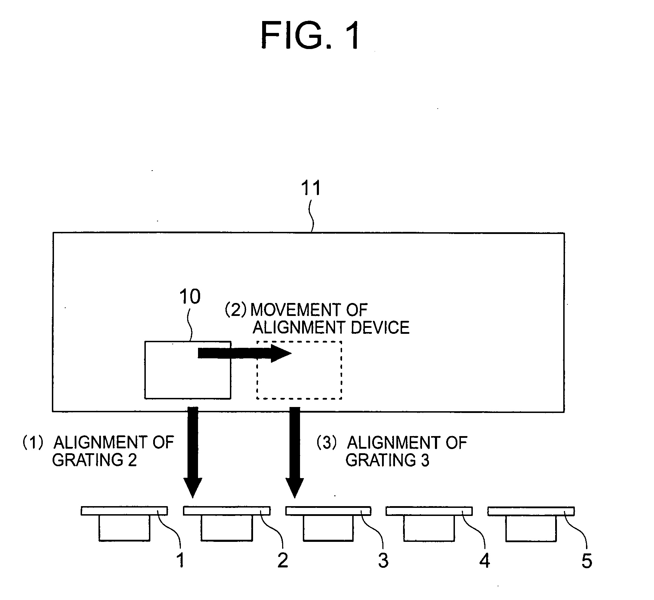

A segmented grating alignment device according to Embodiment 1 of the present invention will be described with reference to FIG. 1. FIG. 1 shows a structure of the segmented grating alignment device according to Embodiment 1 of the present invention. In this drawing, the same reference numerals denote the same or corresponding portions.

In Embodiment 1, a case where five reflection plane gratings are aligned by the segmented grating alignment device will be described.

In FIG. 1, the segmented grating alignment device according to Embodiment 1 includes a grating alignment device 10 whose alignment target is each of plane gratings 1 to 5 and a movable stage 11.

In Embodiment 1, the grating alignment device 10 is moved using the movable stage 11 to perform successive one-by-one alignment. Note that the present invention is not limited to the movable stage 11 but thus any means for moving the grating alignment device 10 may also be used. A plurality of grating alignment devices 10 may be used.

Next, the operation of the segmented grating alignment device according to Embodiment 1 will be described with reference to the attached drawing.

The grating alignment device 10 suitably adjusts an angle A, an angle B, an angle C, a coordinate Z, and a coordinate X of the plane grating 2 to perform alignment for eliminating at least one of an angular misalignment and a phase misalignment which are caused between respective diffracted light beams generated when incident light is diffracted by the plane grating 1 and the plane grating 2 (1).

After the alignment of the plane grating 2 relative to the plane grating 1 using the grating alignment device 10 is completed, the grating alignment device 10 is moved by the movable stage 11 (2) to a position in which the plane grating 3 can be aligned relative to the plane grating 2.

Subsequently, the grating alignment device 10 suitably adjusts an angle A, an angle B, an angle C, a coordinate Z, and a coordinate X of the plane grating 3 to perform alignment for eliminating at least one of an angular misalignment and a phase misalignment which are caused between respective diffracted light beams generated when incident light is diffracted by the plane grating 2 and the plane grating 3 (3). The plane grating 4 and the plane grating 5 are aligned in this order by the above-mentioned operation.

With the structure as described above, Embodiment 1 has an effect capable of adjusting two or more plane gratings so as to eliminate at least one of the angular misalignment and the phase misalignment which are caused between respective diffracted light beams generated when incident light is diffracted by the plane gratings. In addition, Embodiment 1 has the same effect not only in the case of the reflection plane grating but also in the case of a transmission plane grating.

Embodiment 2

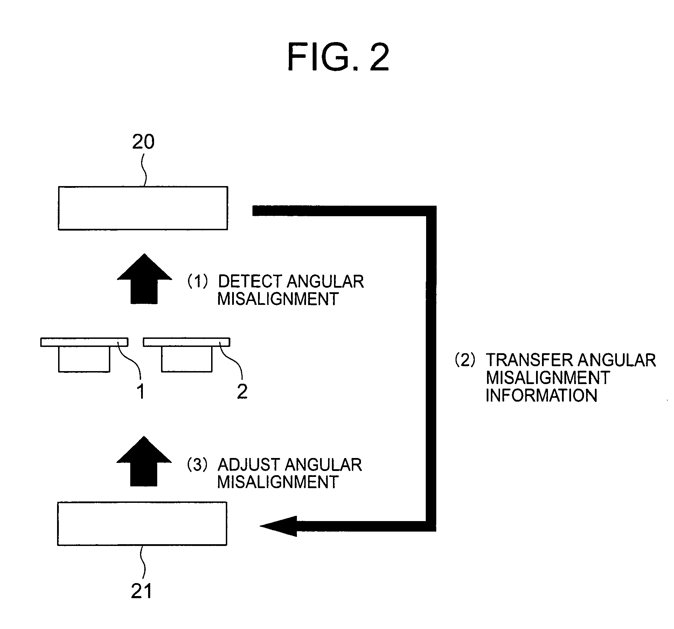

A segmented grating alignment device according to Embodiment 2 of the present invention will be described with reference to FIG. 2. FIG. 2 shows a structure of the segmented grating alignment device according to Embodiment 2 of the present invention.

In FIG. 2, the segmented grating alignment device according to Embodiment 2 includes an angular misalignment detecting means 20 for detecting an angular misalignment between the plane gratings 1 and 2 and an angular misalignment adjusting means 21 for adjusting the angular misalignment between the plane gratings 1 and 2.

Next, the operation of the segmented grating alignment device according to Embodiment 2 will be described with reference to the attached drawings.

The angular misalignment detecting means 20 detects an angular misalignment between respective diffracted light beams generated when incident light is diffracted by the plane grating 1 and the plane grating 2 (1). In addition, the angular misalignment detecting means 20 transfers information of the detected angular misalignment to the angular misalignment adjusting means 21 (2). The angular misalignment adjusting means 21 suitably adjusts the angle A, the angle B, and the angle C of the plane grating 2 based on the information of the angular misalignment between the respective diffracted light beams which are detected by the angular misalignment detecting means 20 (3), thereby performing alignment so as to eliminate the angular misalignment between the respective diffracted light beams.

With the structure as described above, Embodiment 2 has an effect capable of adjusting the two plane gratings 1 and 2 so as to eliminate the angular misalignment between the respective diffracted light beams generated when incident light is diffracted by the plane gratings. In addition, Embodiment 2 has the same effect not only in the case of the reflection plane grating but also in the case of a transmission plane grating.

Embodiment 3

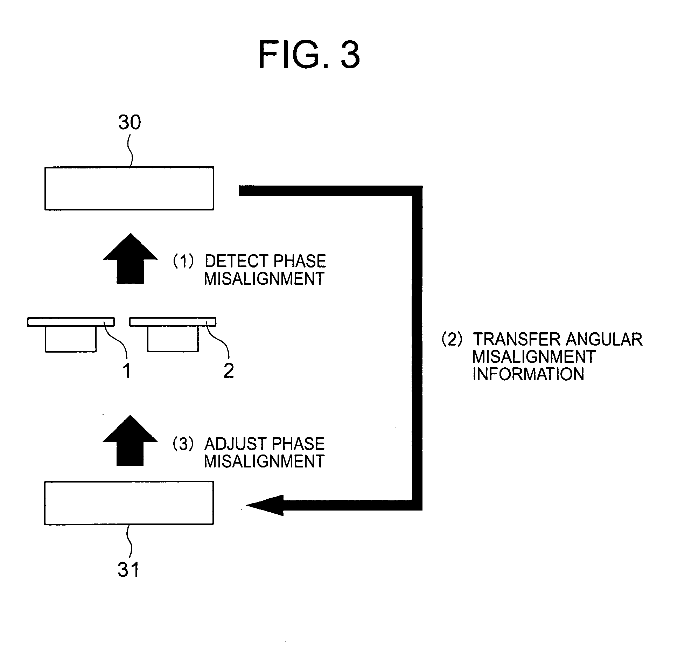

A segmented grating alignment device according to Embodiment 3 of the present invention will be described with reference to FIG. 3. FIG. 3 shows a structure of the segmented grating alignment device according to Embodiment 3 of the present invention.

In FIG. 3, the segmented grating alignment device according to Embodiment 3 includes a phase misalignment detecting means 30 for detecting a phase misalignment between the plane gratings 1 and 2 and a phase misalignment adjusting means 31 for adjusting the phase misalignment between the plane gratings 1 and 2.

Next, the operation of the segmented grating alignment device according to Embodiment 3 will be described with reference to the attached drawing.

The phase misalignment detecting means 30 detects a phase misalignment between respective diffracted light beams generated when incident light is diffracted by the plane grating 1 and the plane grating 2 (1). In addition, the phase misalignment detecting means 30 transfers information of the detected phase misalignment to the phase misalignment adjusting means 31 (2). The phase misalignment adjusting means 31 suitably adjusts the coordinate Z and the coordinate X of the plane grating 2 based on the information of the phase misalignment between the respective diffracted light beams which is detected by the phase misalignment detecting means 30 (3), thereby performing alignment so as to eliminate the phase misalignment between the respective diffracted light beams.

With the structure as described above, Embodiment 3 has an effect capable of adjusting the two plane gratings 1 and 2 so as to eliminate the phase misalignment between the respective diffracted light beams generated when incident light is diffracted by the plane gratings. In addition, Embodiment 3 has the same effect not only in the case of the reflection plane grating but also in the case of a transmission plane grating.

Embodiment 4

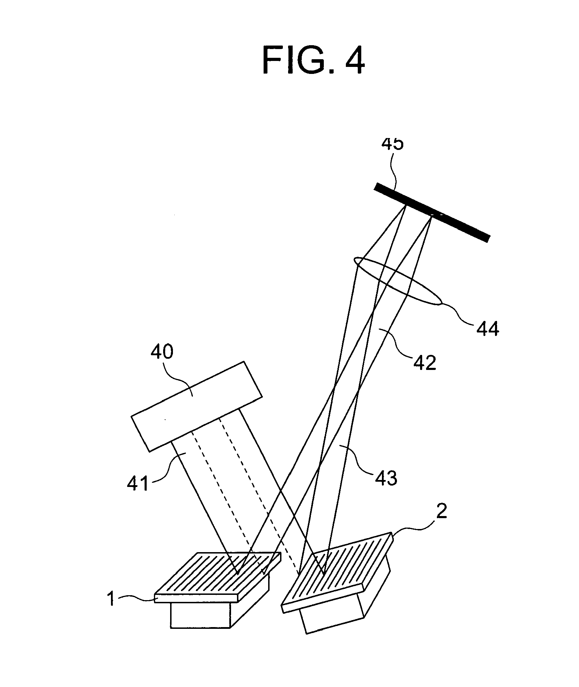

A segmented grating alignment device according to Embodiment 4 of the present invention will be described with reference to FIG. 4. FIG. 4 shows a structure of the segmented grating alignment device according to Embodiment 4 of the present invention.

In FIG. 4, the segmented grating alignment device according to Embodiment 4 includes a light emitting means 40 for emitting light to the plane gratings 1 and 2, each of which is an alignment target, a convex lens 44 for condensing diffracted light beams, and a CCD camera 45 for measuring imaging positions of far-field images of the diffracted light beams. Note that the convex lens 44 and the CCD camera 45 compose a far-field image forming position measuring means.

Incident light 41 is emitted from the light emitting means 40 to the plane grating 1 and the plane grating 2. The incident light 41 is diffracted by the plane grating 1 to generate a diffracted light beam 42. In addition, the incident light 41 is diffracted by the plane grating 2 to generate a diffracted light beam 43. The far-field image forming position measuring means is not limited to a combination of the convex lens 44 and the CCD camera 45 but thus any means having a function of measuring imaging positions of far-field images may be used.

Next, the operation of the segmented grating alignment device according to Embodiment 4 will be described with reference to the attached drawing.

The light emitting means 40 emits the incident light 41 to the plane grating 1 and the plane grating 2. The convex lens 44 condenses the diffracted light beam 42 generated when the incident light 41 is diffracted by the plane grating 1 and the diffracted light beam 43 generated when the incident light 41 is diffracted by the plane grating 2. The CCD camera 45 measures the imaging position of the far-field image of the condensed diffracted light beam 42 and the imaging position of the far-field image of the condensed diffracted light beam 43. When an angular misalignment is caused between the diffracted light beam 42 and the diffracted light beam 43, the imaging positions of the far-field images of the respective diffracted light beams are different from each other. Therefore, the angular misalignment between the diffracted light beam 42 and the diffracted light beam 43 can be detected based on the imaging positions of the far-field images of the respective diffracted light beams.

With the structure as described above, Embodiment 4 has an effect capable of relatively easily detecting the phase misalignment between the respective diffracted light beams generated when the incident light is diffracted by the two plane gratings 1 and 2. In addition, Embodiment 4 has the same effect not only in the case of the reflection plane grating but also in the case of a transmission plane grating.

Embodiment 5

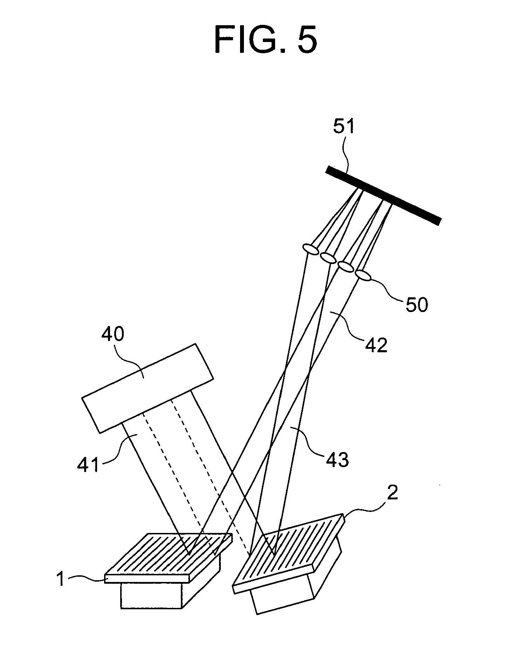

A segmented grating alignment device according to Embodiment 5 of the present invention will be described with reference to FIG. 5. FIG. 5 shows a structure of the segmented grating alignment device according to Embodiment 5 of the present invention.

In FIG. 5, the segmented grating alignment device according to Embodiment 5 includes the light emitting means 40 for emitting light to the plane gratings 1 and 2, each of which is the alignment target, a convex lens array 50 for condensing diffracted light beams, and a CCD camera 51 for measuring far-field image patterns of the diffracted light beams. Note that the convex lens array 50 and the CCD camera 51 compose a wavefront measuring means. The wavefront measuring means is not limited to a combination of the convex lens array 50 and the CCD camera 51 but thus any means having a wavefront measuring function may be used.

Next, the operation of the segmented grating alignment device according to Embodiment 5 will be described with reference to the attached drawing.

The operation of the light emitting means 40 is identical to that in the case of Embodiment 4. The convex lens array 50 condenses the diffracted light beam 42 and the diffracted light beam 43 using two-dimensionally arranged convex lenses. The CCD camera 51 measures the far-field image patterns of the condensed diffracted light beams 42 and 43 to obtain two-dimensional wavefront distributions on diffracted light cross sections. Only angular misalignment components can be separated and extracted from the two-dimensional wavefront distributions on the diffracted light cross sections by signal processing, so higher precision information than the imaging position of the far-field images in Embodiment 4 is obtained in the diffracted light traveling directions. Therefore, the angular misalignment between the diffracted light beam 42 and the diffracted light beam 43 can be detected with higher precision than Embodiment 4.

With the structure as described above, Embodiment 5 has an effect capable of detecting, with higher precision than Embodiment 4, the angular misalignment between the respective diffracted light beams generated when the incident light is diffracted by the plane gratings. In addition, Embodiment 5 has the same effect not only in the case of the reflection plane grating but also in the case of a transmission plane grating.

Embodiment 6

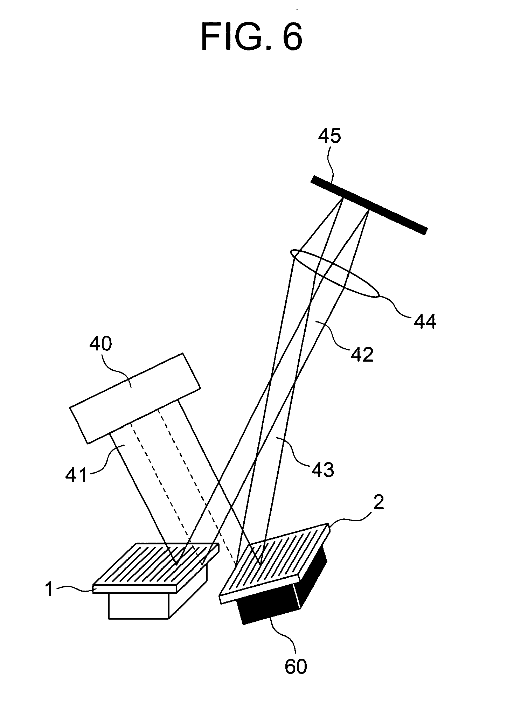

A segmented grating alignment device according to Embodiment 6 of the present invention will be described with reference to FIGS. 6 to 12. FIG. 6 shows a structure of the segmented grating alignment device according to Embodiment 6 of the present invention.

In FIG. 6, the segmented grating alignment device according to Embodiment 6 includes the light emitting means 40 for emitting light to the plane gratings 1 and 2, each of which is the alignment target, the convex lens 44 for condensing diffracted light beams, the CCD camera 45 for measuring the imaging positions of far-field images of the diffracted light beams, and a triaxial angle drive means 60.

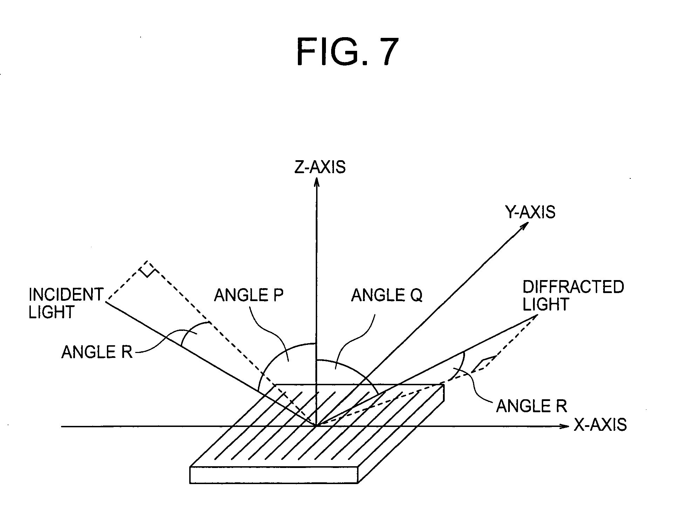

A relationship between each of the angle A, the angle B, and the angle C of a plane grating and the traveling direction of diffracted light generated by diffraction by the plane grating will be described. FIG. 7 shows a relationship between the traveling direction of incident light incident on a plane grating and the traveling direction of diffracted light generated when the incident light is diffracted by the plane grating. Hereinafter, a plane formed by a Z-axis and an X-axis is referred to as XZ-plane. In FIG. 7, an angle P is an angle formed between the Z-axis and the incident light, an angle R is an angle formed between the XZ-plane and the incident light, and an angle Q is an angle formed between the Z-axis and the diffracted light. At this time, an angle formed between the XZ-plane and the diffracted light also becomes the angle R. Assume that a wavelength of the incident light is L and a plane grating groove interval is D. In this case, a relationship between the traveling direction of the incident light and the traveling direction of the diffracted light is expressed by the following expression (1). In the expression (1), n denotes an integer which indicates the order of the diffracted light.

$$n \cdot L = D \cdot \cos R \cdot (\sin P + \sin Q) \qquad \text{Expression (1)}$$

In the case of diffracted light whose diffracted light order n is 0 (hereinafter referred to as 0th-order diffracted light), according to the expression (1), the angle Q becomes equal to -P at each wavelength L of the incident light and each angle R and the traveling direction of the 0th-order diffracted light is identical to the traveling direction of reflected light in a case where the plane grating is assumed to be a mirror. On the other hand, in the case of diffracted light whose diffracted light order n is not 0 (hereinafter referred to as nth-order diffracted light), according to the expression (1), the angle Q of the nth-order diffracted light depends on each of the wavelength L of the incident light, the angle P, and the angle R. Therefore, when the incident light is made incident on the plane grating from a predetermined direction while the angle A, the angle B, and the angle C thereof are changed, the traveling direction of the 0th-order diffracted light does not depend on the angle C but depends on the angle A and the angle B. The traveling direction of the nth-order diffracted light depends on each of the angle A, the angle B, and the angle C.

Next, an angular misalignment between the respective diffracted light beams generated when the incident light 41 is diffracted by the two plane gratings 1 and 2 as shown in FIG. 6 will be discussed. In a case where the diffracted light beam is a 0th-order diffracted light beam, only when the angle A and the angle B of one of the two plane gratings 1 and 2 are equal to those of the other thereof, the angular misalignment between the respective 0th-order diffracted light beams disappears at each wavelength L of the incident light.

On the other hand, in a case where the diffracted light beam is an nth-order diffracted light beam, when all the angle A, the angle B, and the angle C of one of the two plane gratings 1 and 2 are equal to those of the other thereof, the angular misalignment between the respective nth-order diffracted light beams disappears at each wavelength L. Hereinafter, the angular misalignment between the respective nth order diffracted light beams which is caused when the angle A, the angle B, and the angle C of one of the two plane gratings 1 and 2 are changed, relative to a case where all the angle A, the angle B, and the angle C of one of the plane gratings are equal to those of the other thereof and thus the angular misalignment between the respective nth-order diffracted light beams disappears will be discussed. An example of diffracted light whose diffracted light order n is 1 (hereinafter referred to as first-order diffracted light), which is generated when the plane grating groove interval D is 574.7 [nm], the wavelength L of the incident light is 1053 [nm], the angle P of the incident light is 1.264 [rad], and the angle R of the incident light is 0 [rad] in the case where all the angle A, the angle B, and the angle C of one of the plane gratings are equal to those of the other thereof will be discussed.

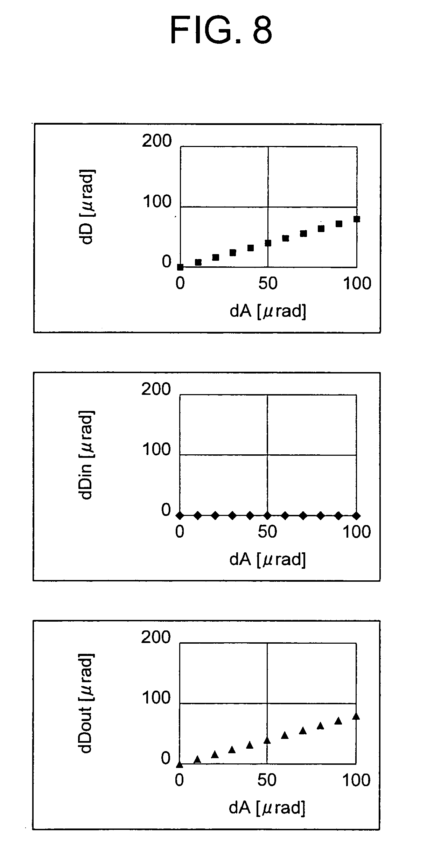

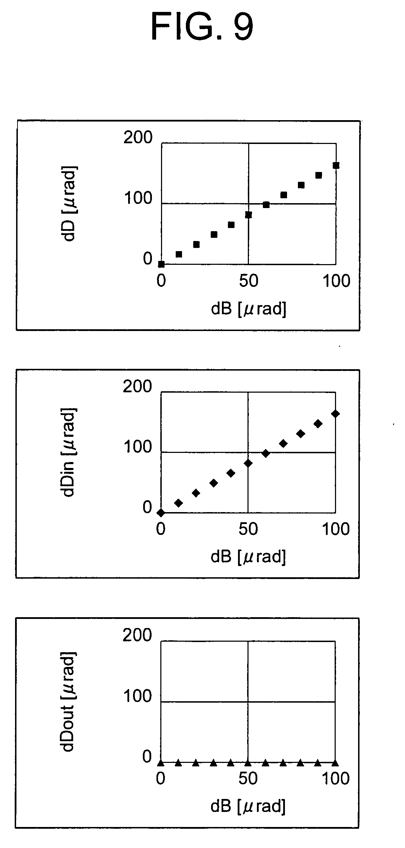

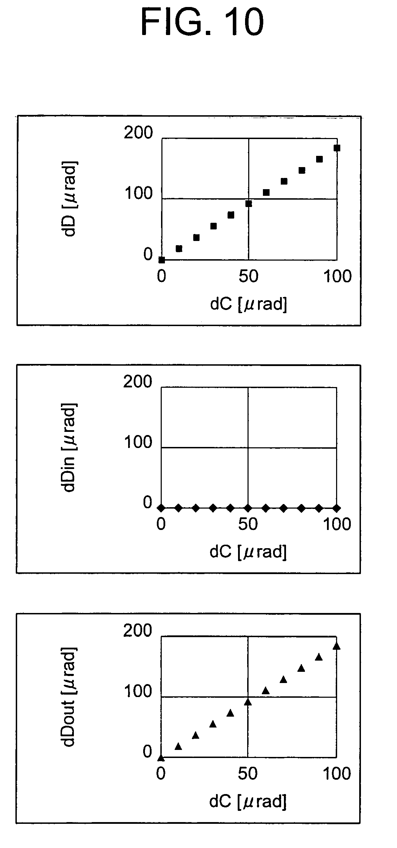

FIG. 8 shows a result obtained by plotting an angular misalignment dD [μrad] between first-order diffracted light beams generated when the angle A of one of the two plane gratings is changed by dA [μrad], an XZ-in-plane component dDin [μrad] of dD, and an XZ-out-of-plane component dDout [μrad] of dD, relative to the case where all the angle A, the angle B, and the angle C of one of the plane gratings are equal to those of the other thereof. FIG. 9 shows the same result as that shown in FIG. 8 in a case where the angle B of one of the two plane gratings is changed by dB [μrad]. FIG. 10 shows the same result as that shown in FIG. 8 in a case where the angle C of one of the two plane gratings is changed by dC [$\mu$rad]. As is apparent from FIGS. 8 to 10, dA and dC cause the angular misalignment between the first-order diffracted light beams in the direction of dDout and dB causes the angular misalignment between the first-order diffracted light beams in the direction of dDin.

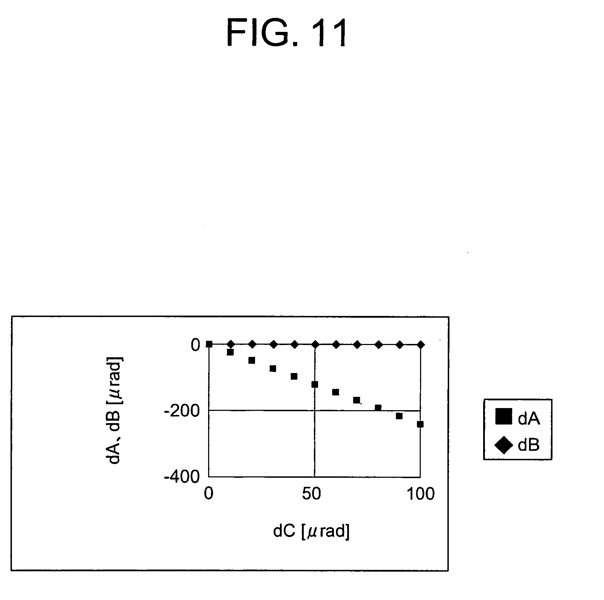

FIG. 11 shows a result obtained by plotting values of dA [$\mu$rad] and dB [$\mu$rad] which are capable of eliminating the angular misalignment between the respective first-order diffracted light beams by adjustment of the angle A and the angle B when the angles C of the two plane gratings are different from each other by dC [$\mu$rad]. That is, even in a case where the angles C of the two plane gratings are different from each other, when the angle A and the angle B are suitably adjusted, the angular misalignment between the respective nth-order diffracted light beams generated by diffraction by the two plane gratings can be eliminated at a wavelength L. In the same manner, even in a case where the angles A of the two plane gratings are different from each other, when the angle B and the angle C are suitably adjusted, the angular misalignment between the respective nth-order diffracted light beams generated by diffraction by the two plane gratings can be eliminated at a wavelength L.

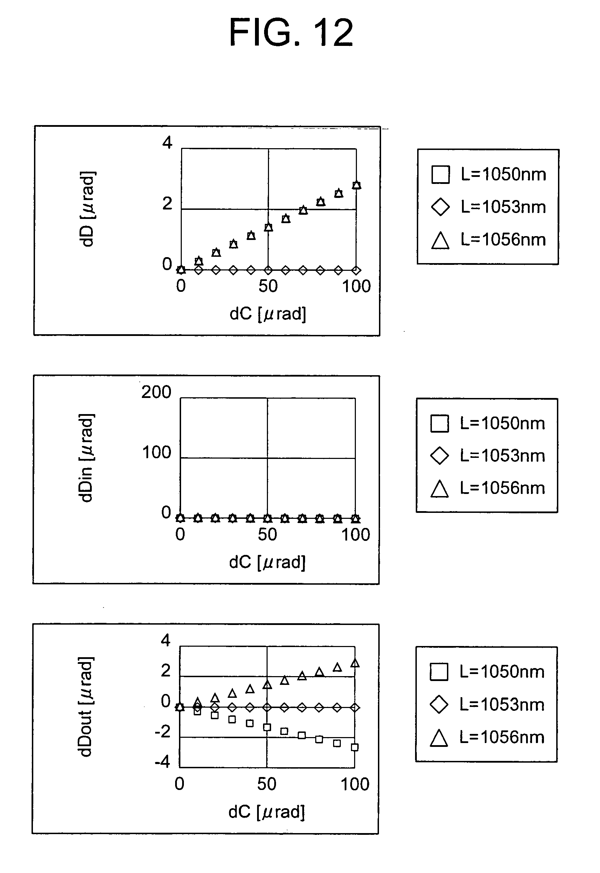

Next, as in the above-mentioned case, first-order diffracted light which is generated when the incident light has three wavelength components of 1050 [nm], 1053 [nm], and 1056 [nm] in the case where the plane grating groove interval D is 574.7 [nm], the angle P of the incident light is 1.264 [rad], and the angle R of the incident light is 0 [rad] will be discussed. Here, the case where the angular misalignment between the respective first-order diffracted light beams is eliminated at the incident light wavelength component of 1053 [nm] by suitably adjusting the angle A and the angle B when the angles C of the two plane gratings are different from each other will be discussed. FIG. 12 shows a result obtained by plotting an angular misalignment dD [$\mu$rad] between the respective first-order diffracted light beams at each of incident light wavelength components of 1050 [nm] and 1056 [nm], an XZ-in-plane component dDin [$\mu$rad] of dD, and an XZ-out-of-plane component dDout [$\mu$rad] of dD in the case where the angular misalignment between the first-order diffracted light beams at the incident light wavelength component of 1053 [nm] is eliminated. As is apparent from FIG. 12, in the case where the angles C of the two plane gratings are different from each other, even when the angle A and the angle B are suitably adjusted to eliminate the angular misalignment between the respective nth-order diffracted light beams at a wavelength L, the angular misalignment between the respective nth-order diffracted light beams is left at each other wavelength. Therefore, it is found that, in a case where the diffracted light beam is an nth-order diffracted light beam and the incident light has a plurality of wavelength components, when the angular misalignment between the respective nth-order diffracted light beams generated by diffraction by the two plane gratings is to be completely eliminated, it is necessary that all the angle A, the angle B, and the angle C of the plane grating 2 be adjusted to make the angle A, the angle B, and the angle C of one of the two plane gratings equal to those of the other thereof.

Next, the operation of the segmented grating alignment device according to Embodiment 6 will be described with reference to the attached drawings.

The operation of each of the light emitting means 40, the convex lens 44, and the CCD camera 45 is identical to that in the case of Embodiment 4. The means described in, for example, Embodiment 4 or 5 is used as means for detecting the angular misalignment between the diffracted light beam 42 and the diffracted light beam 43. The triaxial angle drive means 60 drives the angle A, the angle B, and the angle C of the plane grating 2. When the diffracted light beam is a 0th-order diffracted light beam, the traveling direction of the 0th-order diffracted light beam dose not depend on the angle C of the plane grating 2. Therefore, the angle A and the angle B of the plane grating 2 are adjusted to be equal to the angle A and the angle B of the plane grating 1, thereby aligning the imaging positions of the far-field images of the diffracted light beams 42 and 43 with each other. Thus, the angular misalignment between the diffracted light beam 42 and the diffracted light beam 43 can be eliminated at each wavelength.

On the other hand, when the diffracted light beam is an nth-order diffracted light beam and the incident light is monochromatic light, the angle C of the plane grating 2 is held without adjustment and the angle A and the angle B of the plane grating 2 are suitably adjusted, thereby aligning the imaging positions of the far-field images of the diffracted light beams 42 and 43 with each other. Thus, the angular misalignment between the diffracted light beam 42 and the diffracted light beam 43 can be eliminated at the wavelength of the incident light. Even when the angle A of the plane grating 2 is held without adjustment and the angle B and the angle C of the plane grating 2 are suitably adjusted, the angular misalignment between the diffracted light beam 42 and the diffracted light beam 43 can be eliminated at the wavelength of the incident light. When the diffracted light beam is an nth-order diffracted light beam and the incident light has a plurality of wavelength components, the angle A, the angle B, and the angle C of the plane grating 2 are adjusted to be equal to the angle A, the angle B, and the angle C of the plane grating 1, thereby aligning the imaging positions of the far-field images of the diffracted light beams 42 and 43 with each other. Thus, the angular misalignment between the diffracted light beam 42 and the diffracted light beam 43 can be eliminated at each wavelength.

With the structure as described above, Embodiment 6 has an effect capable of relatively easily adjusting the two plane gratings 1 and 2 so as to eliminate the phase misalignment between the respective diffracted light beams generated when the incident light is diffracted by the plane gratings 1 and 2. In addition, Embodiment 6 has the same effect not only in the case of the reflection plane grating but also in the case of a transmission plane grating.

Embodiment 7

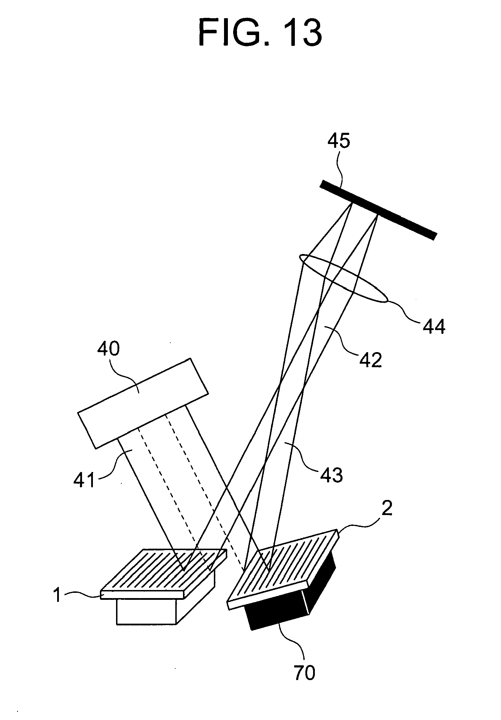

A segmented grating alignment device according to Embodiment 7 of the present invention will be described with reference to FIG. 13. FIG. 13 shows a structure of the segmented grating alignment device according to Embodiment 7 of the present invention.

In FIG. 13, the segmented grating alignment device according to Embodiment 7 includes the light emitting means 40 for emitting light to the plane gratings 1 and 2, each of which is the alignment target, the convex lens 44 for condensing diffracted light beams, the CCD camera 45 for measuring the imaging positions of far-field images of the diffracted light beams, and biaxial angle drive means 70.

Next, the operation of the segmented grating alignment device according to Embodiment 7 will be described with reference to the attached drawing.

The operation of each of the light emitting means 40, the convex lens 44, and the CCD camera 45 is identical to that in the case of Embodiment 4. The means described in, for example, Embodiment 4 or 5 is used as means for detecting the angular misalignment between the diffracted light beam 42 and the diffracted light beam 43. The biaxial angle drive means 70 drives the angle A and the angle B of the plane grating 2 or the angle B and the angle C thereof. When the diffracted light beam is a 0th-order diffracted light beam, the traveling direction of the 0th-order diffracted light beam dose not depend on the angle C. Therefore, it is necessary to set two axes with respect to the angle A and the angle B as driven axes. When the diffracted light beam is a 0th-order diffracted light beam, the angle A and the angle B of the plane grating 2 are adjusted to be equal to the angle A and the angle B of the plane grating 1, thereby aligning the imaging positions of the far-field images of the diffracted light beams 42 and 43 with each other. Therefore, the angular misalignment between the diffracted light beam 42 and the diffracted light beam 43 can be eliminated at each wavelength.

On the other hand, when the diffracted light beam is an nth-order diffracted light beam and the incident light is monochromatic light, the angle A and the angle B of the plane grating 2 or the angle B and the angle C thereof are suitably adjusted, thereby aligning the imaging positions of the far-field images of the diffracted light beams 42 and 43 with each other. Therefore, the angular misalignment between the diffracted light beam 42 and the diffracted light beam 43 can be eliminated at the wavelength of the incident light. When the diffracted light beam is an nth-order diffracted light beam and the incident light has a plurality of wavelength components, the angle A and the angle B of the plane grating 2 or the angle B and the angle C thereof are suitably adjusted. Therefore, the angular misalignment between the diffracted light beam 42 and the diffracted light beam 43 can be eliminated at one of the wavelengths. However, the angular misalignment between the respective nth-order diffracted light beams is left at each of the other wavelengths. In the case where the angle C is not adjusted, when the angular misalignment between the angle C of the plane grating 1 and the angle C of the plane grating 2 is sufficiently small, the angle A and the angle B are suitably adjusted so that the angular misalignment between the diffracted light beam 42 and the diffracted light beam 43 can be reduced to a negligible extent. In the case where the angle A is not adjusted, when the angular misalignment between the angle A of the plane grating 1 and the angle A of the plane grating 2 is sufficiently small, the angle B and the angle C are suitably adjusted so that the angular misalignment between the diffracted light beam 42 and the diffracted light beam 43 can be reduced to a negligible extent. The biaxial angle drive means 70 in Embodiment 7 has slightly lower angular misalignment adjusting performance than the triaxial angle drive means 60 in Embodiment 6. However, there is an advantage in that this means is low in cost and light in weight because the number of driven axes is small.

With the structure as described above, the device according to Embodiment 7 is lower in cost and lighter in weight than that according to Embodiment 6, and has the following effects with respect to the two plane gratings. In each of the case where the diffracted light beam is the 0th-order diffracted light beam and the case where the diffracted light beam is the nth-order diffracted light beam and the incident light is the monochromatic light, there is an effect that adjustment can be performed so as to eliminate the angular misalignment between the respective diffracted light beams generated when the incident light is diffracted by the plane gratings. In the case where the diffracted light beam is the nth-order diffracted light beam and the incident light has a plurality of wavelength components, when the angular misalignment between angles of the two plane gratings which are not adjusted is sufficiently small, there is an effect that adjustment can be performed so as to reduce the angular misalignment between the respective diffracted light beams generated when the incident light is diffracted by the plane gratings, to a negligible extent. Embodiment 7 has the same effect not only in the case of the reflection plane grating but also in the case of a transmission plane grating.

Embodiment 8

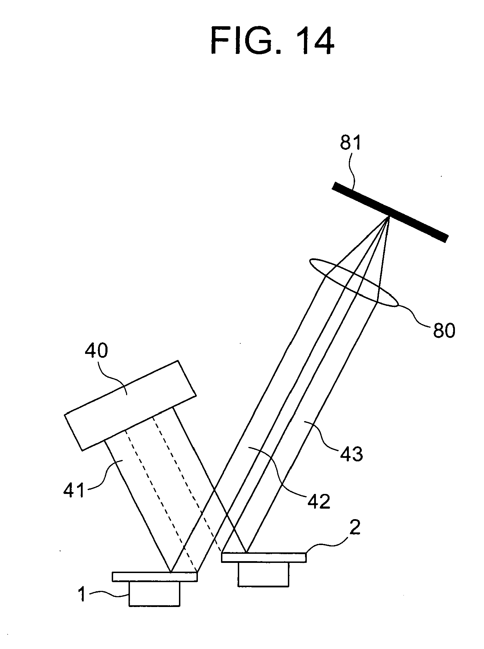

A segmented grating alignment device according to Embodiment 8 of the present invention will be described with reference to FIG. 14. FIG. 14 shows a structure of the segmented grating alignment device according to Embodiment 8 of the present invention.

In FIG. 14, the segmented grating alignment device according to Embodiment 8 includes the light emitting means 40 for emitting light to the plane gratings 1 and 2, each of which is the alignment target, a convex lens 80 for condensing diffracted light beams, and a CCD camera 81 for measuring an intensity of interference light between far-field images of the diffracted light beams. Note that the convex lens 80 and the CCD camera 81 compose far-field image intensity measuring means. The far-field image intensity measuring means is not limited to a combination of the convex lens 80 and the CCD camera 81, and thus, any means having a function of measuring the intensity of the interference light between the far-field images may be used.

Next, the operation of the segmented grating alignment device according to Embodiment 8 will be described with reference to the attached drawing.

The operation of the light emitting means 40 is identical to that in the case of Embodiment 4. Here, the case where the adjustment is already performed so as to eliminate the angular misalignment between the diffracted light beam 42 and the diffracted light beam 43 using the means described in Embodiment 4, 5, and the like will be discussed. In this case, the imaging position of the far-field image of the diffracted light beam 42 is aligned with the imaging position of the far-field image of the diffracted light beam 43, with the result that the diffracted light beam 42 and the diffracted light beam 43 interfere with each other at the imaging position of the far-field images.

The convex lens 80 condenses the diffracted light beam 42 and the diffracted light beam 43. The CCD camera 81 measures the intensity of the interference light between the far-field image of the condensed diffracted light beam 42 and the far-field image of the condensed diffracted light beam 43. At this time, when there is the phase misalignment between the diffracted light beam 42 and the diffracted light beam 43, the intensity of the interference light does not become maximum. When there is no phase misalignment between the diffracted light beam 42 and the diffracted light beam 43, the intensity of the interference light becomes maximum. When such a characteristic is used, the phase misalignment between the diffracted light beam 42 and the diffracted light beam 43 can be detected based on the intensity of the interference light.

With the structure as described above, Embodiment 8 has an effect in that the phase misalignment between the respective diffracted light beams generated when the incident light is diffracted by the two plane gratings 1 and 2 can be detected relatively easily. In addition, Embodiment 8 has the same effect not only in the case of the reflection plane grating but also in the case of a transmission plane grating.

Embodiment 9

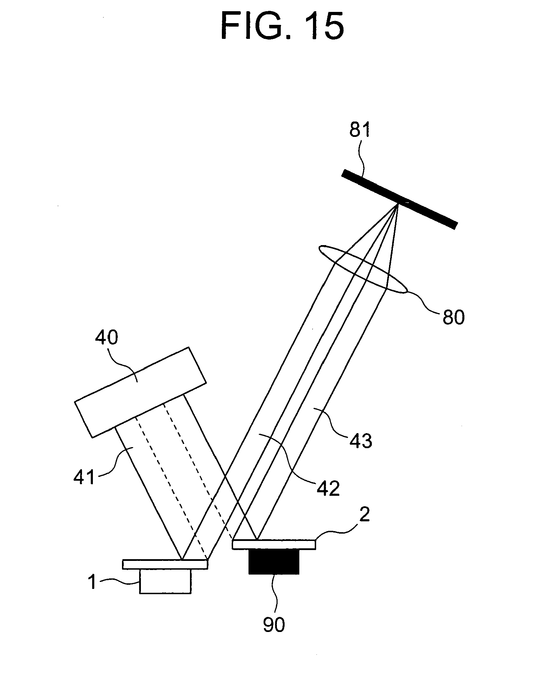

A segmented grating alignment device according to Embodiment 9 of the present invention will be described with reference to FIGS. 15 to 18. FIG. 15 shows a structure of the segmented grating alignment device according to Embodiment 9 of the present invention.

In FIG. 15, the segmented grating alignment device according to Embodiment 9 includes the light emitting means 40 for emitting light to the plane gratings 1 and 2, each of which is the alignment target, the convex lens 80 for condensing diffracted light beams, the CCD camera 81 for measuring an intensity of interference light between far-field images of the diffracted light beams, and biaxial phase drive means 90.

Here, a relationship between each of the coordinate Z and the coordinate X of each of the plane gratings and a phase misalignment between the respective diffracted light beams generated by diffraction by the plane gratings will be described. As in the case of Embodiment 6, the case where light having the wavelength L is incident on the plane grating having the groove interval D will be discussed. The incident light is a wave having a period of $2\pi$, such as a sinusoidal wave. Assume that an angle formed between the Z-axis and the diffracted light beam is the angle P, an angle formed between the Z-axis and the diffracted light beam is the angle Q, an angle formed between the incident light and the XZ-plane is the angle R, and the angle R is set to 0 [rad]. When a coordinate misalignment between the coordinate Z of the plane grating 1 and the coordinate Z of the plane grating 2 is expressed by dZ and a coordinate difference between the coordinate X of the plane grating 1 and the coordinate X of the plane grating 2 is expressed by dX, the phase misalignment dP between the diffracted light beams is expressed by the following expression (2).

$$dP = 2\pi \cdot mod\{dZ \cdot (cosP + cosQ)/L - dX \cdot (sinP + sinQ)/L\}$$

$$\text{Expression (2)}$$

Here, when R denotes a real number, mod{R} denotes a function indicating a remainder produced when R is divided by 1. When R > 0, the remainder produced when R is divided by 1 is expressed by mod{R}. When R < 0, a value obtained by adding a negative sign to a remainder produced when (-R) is divided by 1 is expressed by mod{R}. When the expression (1) is used, the expression (2) is modified to the following expression (3). In the expression (3), n denotes the order of the diffracted light beam.

$$dP = 2\pi \cdot mod\{dZ \cdot (\cos P + \cos Q)/L - dX \cdot n/D\}$$

Expression (3)

In the expression (3), when the phase misalignment dP becomes 0, the phase misalignment between the respective diffracted light beams generated by diffraction by the two plane gratings 1 and 2 disappears. When the diffracted light beam is a 0th-order diffracted light beam, the contribution of the second term of the right side of the expression (3) becomes 0. Therefore, when the coordinate misalignment between the coordinates Z of the two plane gratings is expressed by "dZ=s·L/(2·cosP) (s is an integer)", the phase misalignment between the respective diffracted light beams disappears irrespective of a value of the coordinate difference dX between the coordinates X of the two plane gratings. When the diffracted light beam is an nth-order diffracted light beam, for example, when dX = t·D/n (t is an integer), the contribution of the second term of the right side of the expression (3) becomes 0. Therefore, when dZ = s·L/(cosP + cosQ) (s is an integer), the phase misalignment between the respective diffracted light beams disappears.

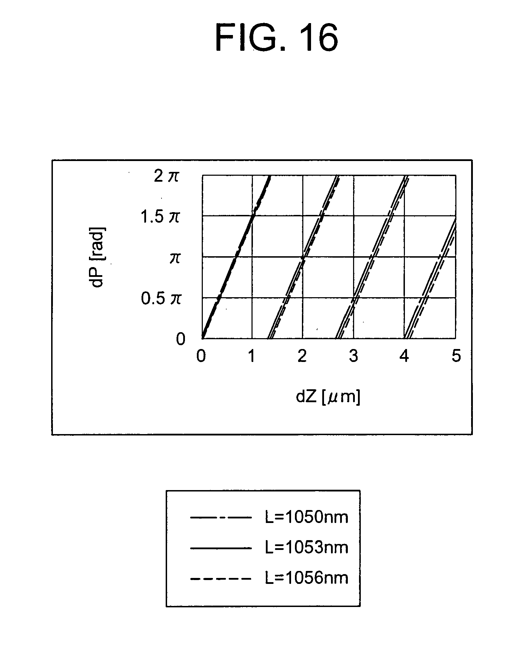

An example of first-order diffracted light which is generated when the plane grating groove interval D is 574.7 [nm], the angle P of the incident light is 1.264 [rad], the angle R of the incident light is 0 [rad], and the incident light has three wavelength components of 1050 [nm], 1053 [nm], and 1056 [nm] in the case where all the angle A, the angle B, and the angle C of the plane grating 1 are equal to those of the plane grating 2 will be discussed. FIG. 16 shows a result obtained by plotting the phase misalignment dP [rad] between first-order diffracted light beams relative to the coordinate misalignment dZ [μm] between the coordinates Z in the case where the coordinate difference dX between the coordinates X of the plane gratings 1 and 2 is set to 0. As is apparent from FIG. 16, a value of the phase misalignment dP relative to the coordinate misalignment dZ is changed according to the wavelength L.

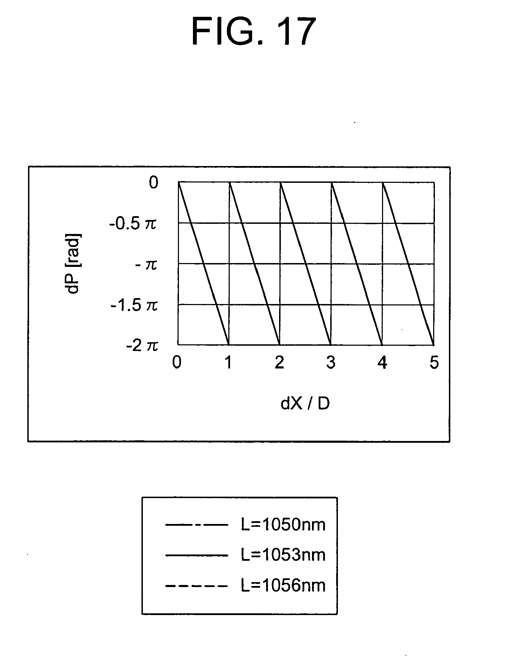

FIG. 17 shows a result obtained by plotting the phase misalignment dP [rad] between the first-order diffracted light beams relative to a value dX/D obtained by normalizing the coordinate difference dX [μm] between the coordinates X by the plane grating groove interval D [μm] in the case where the coordinate misalignment dZ between the coordinates Z of the plane gratings 1 and 2 is set to 0. As is apparent from FIG. 17, values of the phase misalignment dP relative to the coordinate difference dX at respective wavelengths L become equal to one another. In addition, as is apparent from FIG. 17, a period of the phase misalignment dP relative to the coordinate difference dX corresponds to the groove interval D at each wavelength L. Therefore, even in the case where a phase misalignment is caused by the coordinate difference dX between the coordinates X of the two plane gratings, when the coordinate misalignment dZ between the coordinates Z is suitably adjusted, the phase misalignment between the respective nth-order diffracted light beams generated by diffraction by the two plane gratings can be eliminated at a wavelength L. In the same manner, even in the case where a phase misalignment is caused by the coordinate misalignment dZ between the coordinates Z of the two plane gratings, when the coordinate difference dX between the coordinates X is suitably adjusted, the phase misalignment between the respective nth order diffracted light beams generated by diffraction by the two plane gratings can be eliminated at a wavelength L.

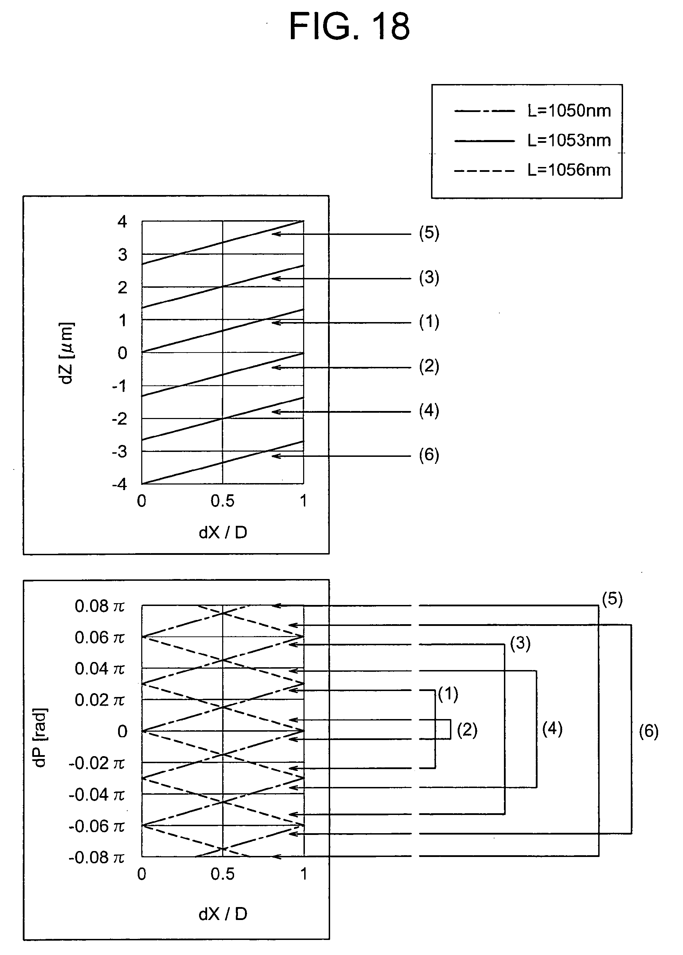

Next, the case where the phase misalignment between the respective first-order diffracted light beams is eliminated at the incident light wavelength component of 1053 [nm] by suitably adjusting the coordinate misalignment dZ between the coordinates Z when the phase misalignment is caused by the coordinate difference dX between the coordinates X of the two plane gratings will be discussed. FIG. 18 shows a result obtained by plotting the coordinate misalignment dZ capable of eliminating the phase misalignment caused by the coordinate difference dX at the wavelength component of 1053 [nm] and a result obtained by plotting the relative phase misalignment dP between the respective first-order diffracted light beams at each of incident light wavelength components of 1050 [nm] and 1056 [nm] in the case where the coordinate difference dX and the coordinate misalignment dZ are selected. Also in FIG. 18, the value dX/D obtained by normalizing the coordinate difference dX [μm] between the coordinates X by the plane grating groove interval D [μm] is used as the coordinate difference between the coordinates X. The period of the phase misalignment caused by the coordinate difference dX between the coordinates X corresponds to the plane grating groove interval D [μm], so dX of 0 to D, that is, dX/D of 0 to 1 is plotted in FIG. 18. As is apparent from FIG. 18, in the case where the phase misalignment is caused by the coordinate difference dX between the coordinates X of the two plane gratings, even when the coordinate misalignment dZ between the coordinates Z is suitably adjusted to eliminate the phase misalignment between the respective nth-order diffracted light beams at a wavelength L, the phase misalignment between the respective nth-order diffracted light beams is left at each of the other wavelengths. Therefore, it is found that, in the case where the diffracted light beam is the nth-order diffracted light beam and the incident light has a plurality of wavelength components, in order to completely eliminate the phase misalignment between the respective nth-order diffracted light beams generated by diffraction by the two plane gratings, it is necessary that both the coordinate Z and the coordinate X of the plane grating 2 be adjusted to make dX and dZ equal to "t.D/n (t is an integer)" and 0, respectively.

Next, the operation of the segmented grating alignment device according to Embodiment 9 will be described with reference to the attached drawing.

The operation of each of the light emitting means 40, the convex lens 80, and the CCD camera 81 is identical to that in the case of Embodiment 8. The means described in Embodiment 8 or the like is used as means for detecting the phase misalignment between the diffracted light beam 42 and the diffracted light beam 43. The biaxial phase drive means 90 drives the coordinate Z and the coordinate X of the plane grating 2. When the diffracted light beam is the 0th-order diffracted light beam and the incident light 41 is the monochromatic light, the phase misalignment between the 0th-order diffracted light beams does not depend on the coordinate X of the plane grating 2. Therefore, when the coordinate Z of the plane grating 2 is adjusted such that dZ satisfies "$dZ = s \cdot L/(2 \cdot cosP)$ (s is an integer)", the intensity of the interference light between the far-field image of the diffracted light beam 42 and the far-field image of the diffracted light beam 43 becomes maximum, so the phase misalignment between the diffracted light beam 42 and the diffracted light beam 43 can be eliminated. When the diffracted light beam is the 0th-order diffracted light beam and the incident light 41 has a plurality of wavelength components, the phase misalignment between the 0th-order diffracted light beams does not depend on the coordinate X of the plane grating 2. Therefore, only when the coordinate Z of the plane grating 2 is adjusted such that dZ becomes equal to 0, the intensity of the interference light between the far-field image of the diffracted light beam 42 and the far-field image of the diffracted light beam 43 becomes maximum, so the phase misalignment between the diffracted light beam 42 and the diffracted light beam 43 can be eliminated.

On the other hand, when the diffracted light beam is the nth-order diffracted light beam and the incident light 41 is the monochromatic light, one of the coordinate X and the coordinate Z of the plane grating 2 is fixed without adjustment and the other of the coordinate X and the coordinate Z of the plane grating 2 is suitably adjusted to satisfy a relationship between dX and dZ in which dP in the expression (3) becomes equal to 0. When the relationship is satisfied, the intensity of the interference light between the far-field image of the diffracted light beam 42 and the far-field image of the diffracted light beam 43 becomes maximum, with the result that the phase misalignment between the diffracted light beam 42 and the diffracted light beam 43 can be eliminated at the wavelength of the incident light. In the case where the diffracted light beam is the nth-order diffracted light beam and the incident light 41 has a plurality of wavelength components, only when the coordinate Z and the coordinate X of the plane grating 2 are suitably adjusted to make dX and dZ equal to "$t \cdot D/n$ (t is an integer)" and 0, respectively, the intensity of the interference light between the far-field image of the diffracted light beam 42 and the far-field image of the diffracted light beam 43 becomes maximum. As a result, the phase misalignment between the diffracted light beam 42 and the diffracted light beam 43 can be eliminated.

With the structure as described above, Embodiment 9 has an effect in that the two plane gratings 1 and 2 can be adjusted relatively easily so as to eliminate the phase misalignment between the respective diffracted light beams generated when the incident light is diffracted by the plane gratings. In addition, Embodiment 9 has the same effect not only in the case of the reflection plane grating but also in the case of a transmission plane grating.

Embodiment 10

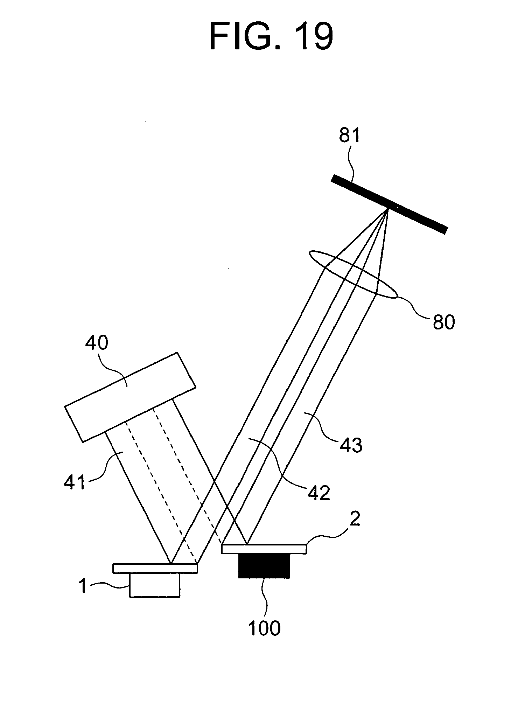

A segmented grating alignment device according to Embodiment 10 of the present invention will be described with reference to FIG. 19. FIG. 19 shows a structure of the segmented grating alignment device according to Embodiment 10 of the present invention.

In FIG. 19, the segmented grating alignment device according to Embodiment 10 includes the light emitting means 40 for emitting light to the plane gratings 1 and 2, each of which is the alignment target, the convex lens 80 for condensing diffracted light beams, the CCD camera 81 for measuring an intensity of interference light between far-field images of the diffracted light beams, and a uniaxial phase drive means 100.

Next, the operation of the segmented grating alignment device according to Embodiment 10 will be described with reference to the attached drawing.

The operation of each of the light emitting means 40, the convex lens 80, and the CCD camera 81 is identical to that in the case of Embodiment 8. The means described in Embodiment 8 or the like is used as means for detecting the phase misalignment between the diffracted light beam 42 and the diffracted light beam 43. The uniaxial phase drive means 100 drives the coordinate Z or the coordinate X of the plane grating 2. Note that, when the diffracted light beam is the 0th-order diffracted light beam, a phase misalignment between the 0th-order diffracted light beams does not depend on the coordinate X. Thus, it is necessary to set the coordinate Z as the driven axis. When the diffracted light beam is the 0th-order diffracted light beam and the incident light is the monochromatic light, the coordinate Z of the plane grating 2 is adjusted such that dZ satisfies a relationship of "$dZ = s \cdot L/(2 \cdot cosP)$ (s is an integer)", and the intensity of the interference light between the far-field image of the diffracted light beam 42 and the far-field image of the diffracted light beam 43 becomes maximum. As a result, the phase misalignment between the diffracted light beam 42 and the diffracted light beam 43 can be eliminated. In the case where the diffracted light beam is the 0th-order diffracted light beam and the incident light has a plurality of wavelength components, only when the coordinate Z of the plane grating 2 is adjusted such that dZ becomes equal to 0, the intensity of the interference light between the far-field image of the diffracted light beam 42 and the far-field image of the diffracted light beam 43 becomes maximum. As a result, the phase misalignment between the diffracted light beam 42 and the diffracted light beam 43 can be eliminated.

On the other hand, when the diffracted light beam is the nth-order diffracted light beam and the incident light is the monochromatic light, one of the coordinate X and the coordinate Z of the plane grating 2 is suitably adjusted to satisfy a relationship between dX and dZ in which dP in the expression (3) becomes equal to 0. When the relationship is satisfied, the intensity of the interference light between the far-field image of the diffracted light beam 42 and the far-field image of the diffracted light beam 43 becomes maximum, with the result that the phase misalignment between the diffracted light beam 42 and the diffracted light beam 43 can be eliminated at the wavelength of the incident light. In contrast, in the case where the diffracted light beam is the nth-order diffracted light beam and the incident light has a plurality of wavelength components, when one of the coordinate Z and the coordinate X of the plane grating 2 is suitably adjusted, the phase misalignment between the diffracted light beam 42 and the diffracted light beam 43 can be eliminated at one of the wavelengths. However, the phase misalignment between the respective nth-order diffracted light beams is left at each of the other wavelengths. In the case where the coordinate Z is not adjusted, when the coordinate misalignment between the angles Z of the plane gratings 1 and 2 is sufficiently small, the coordinate X is suitably adjusted so that the phase misalignment between the diffracted light beam 42 and the diffracted light beam 43 can be reduced to a negligible extent. A phase misalignment caused by the relative coordinate difference between the coordinate X of the plane grating 1 and the coordinate X of the plane grating 2 has no dependence on wavelength. Therefore, when the coordinate X is not adjusted, the coordinate Z is suitably adjusted so that the phase misalignment between the diffracted light beam 42 and the diffracted light beam 43 can be reduced to a negligible extent. The uniaxial phase drive means 100 in Embodiment 10 has slightly lower phase misalignment adjusting performance than that of the biaxial phase drive means 90 in Embodiment 9. However, there is an advantage in that this means is low in cost and light in weight because the number of driven axes is small.

With the structure as described above, the device according to Embodiment 10 is lower in cost and lighter in weight than that according to Embodiment 9 and has the following effects with respect to the two plane gratings 1 and 2. In each of the case where the diffracted light beam is the 0th-order diffracted light beam and the case where the diffracted light beam is the nth-order diffracted light beam and the incident light is the monochromatic light, there is an effect that adjustment can be performed so as to eliminate the phase misalignment between the respective diffracted light beams generated when the incident light is diffracted by the plane gratings. In the case where the diffracted light beam is the nth-order diffracted light beam and the incident light has a plurality of wavelength components, when the coordinate misalignment between coordinates of the two plane gratings which are not adjusted is sufficiently small, there is an effect that adjustment can be performed so as to reduce the phase misalignment between the respective diffracted light beams generated when the incident light is diffracted by the plane gratings, to a negligible extent. Embodiment 10 has the same effect not only in the case of the reflection plane grating but also in the case of a transmission plane grating.

Embodiment 11

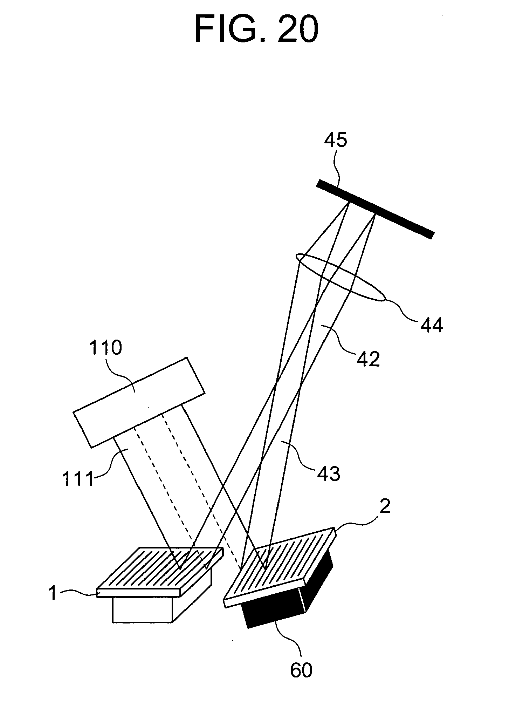

A segmented grating alignment device according to Embodiment 11 of the present invention will be described with reference to FIG. 20. FIG. 20 shows a structure of the segmented grating alignment device according to Embodiment 11 of the present invention.

In FIG. 20, the segmented grating alignment device according to Embodiment 11 includes a light source 110 for emitting temporal coherent and substantially parallel light 111 having a plurality of wavelength components to the plane gratings 1 and 2, each of which is the alignment target, the convex lens 44 for condensing diffracted light beams, the CCD camera 45 for measuring the imaging positions of far-field images of the diffracted light beams, and the triaxial angle drive means 60.

Next, the operation of the segmented grating alignment device according to Embodiment 11 will be described with reference to the attached drawing.

The light source 110 emits the temporal coherent and substantially parallel light 111 to the plane grating 1 and the plane grating 2. The operation of each of the convex lens 44, the CCD camera 45, and the triaxial angle drive means 60 is identical to that in the case of Embodiment 4 or 6. The temporal coherent and substantially parallel light 111 has the plurality of wavelength components, so adjustment can be performed so as to eliminate an angular misalignment and a phase misalignment which are caused between the diffracted light beam 42 and the diffracted light beam 43 at each of the plurality of wavelength components.

With the structure as described above, Embodiment 11 has an effect in that adjustment can be performed relatively easily so as to eliminate the angular misalignment and the phase misalignment which are caused between the respective diffracted light beams generated when the incident light is diffracted by the plane gratings 1 and 2 at each of the plurality of wavelength components. In addition, Embodiment 11 has the same effect not only in the case of the reflection plane grating but also in the case of a transmission plane grating.

Embodiment 12

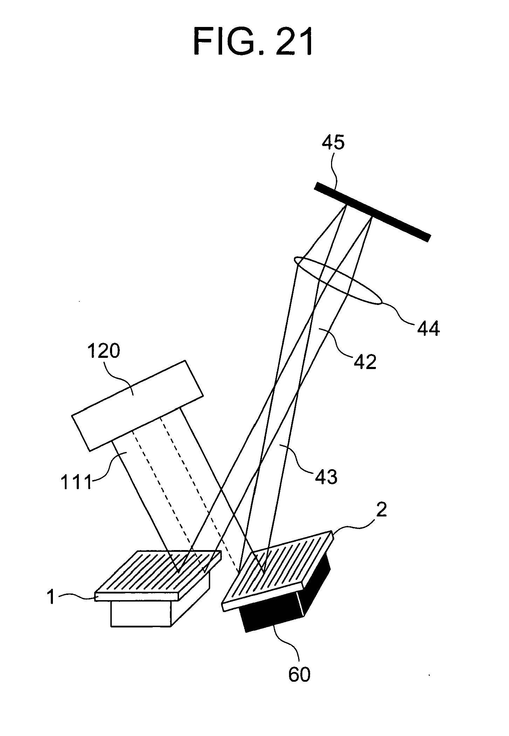

A segmented grating alignment device according to Embodiment 12 of the present invention will be described with reference to FIG. 21. FIG. 21 shows a structure of the segmented grating alignment device according to Embodiment 12 of the present invention.

In FIG. 21, the segmented grating alignment device according to Embodiment 12 includes a wavelength variable light source 120 for emitting light to the plane gratings 1 and 2, each of which is the alignment target, the convex lens 44 for condensing diffracted light beams, the CCD camera 45 for measuring the imaging positions of far-field images of the diffracted light beams, and the triaxial angle drive means 60. Note that not the wavelength variable light source 120 but a plurality of laser light sources having different oscillation frequencies may be used as the light source for emitting temporal coherent and substantially parallel light having the plurality of wavelength components.

Next, the operation of the segmented grating alignment device according to Embodiment 12 will be described with reference to the attached drawing.

The wavelength variable light source 120 emits the temporal coherent and substantially parallel light 111 to the plane grating 1 and the plane grating 2. The operation of each of the convex lens 44, the CCD camera 45, and the triaxial angle drive means 60 is identical to that in the case of Embodiment 4 or 6. The operation of Embodiment 12 is based on the operation of Embodiment 11.

With the structure as described above, Embodiment 12 has an effect in that the effect described in Embodiment 11 can be realized relatively easily by reducing a size and a cost of the device. In addition, Embodiment 12 has the same effect not only in the case of the reflection plane grating but also in the case of a transmission plane grating.

Embodiment 13

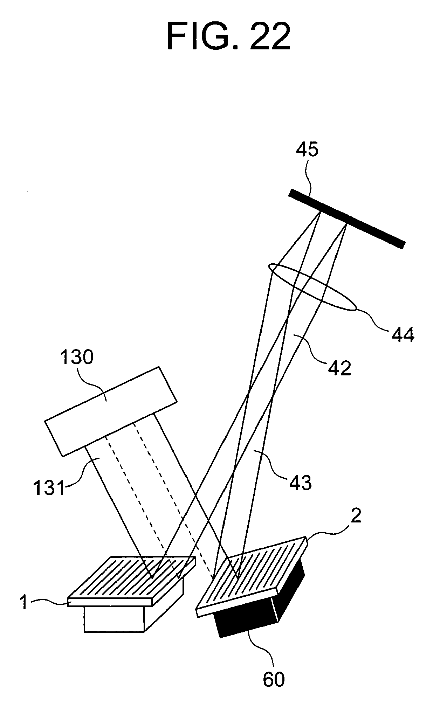

A segmented grating alignment device according to Embodiment 13 of the present invention will be described with reference to FIG. 22. FIG. 22 shows a structure of the segmented grating alignment device according to Embodiment 13 of the present invention.

In FIG. 22, the segmented grating alignment device according to Embodiment 13 includes a light source 130 for emitting temporal low-coherent and substantially parallel light 131 having a plurality of wavelength components to the plane gratings 1 and 2, each of which is the alignment target, the convex lens 44 for condensing diffracted light beams, the CCD camera 45 for measuring the imaging positions of far-field images of the diffracted light beams, and the triaxial angle drive means 60.

Next, the operation of the segmented grating alignment device according to Embodiment 13 will be described with reference to the attached drawing.

The light source 130 emits the temporal low-coherent and substantially parallel light 131 to the plane grating 1 and the plane grating 2. The operation of each of the convex lens 44, the CCD camera 45, and the triaxial angle drive means 60 is identical to that in the case of Embodiment 4 or 6. The temporal low-coherent and substantially parallel light 131 has the plurality of wavelength components, so adjustment can be performed so as to eliminate the angular misalignment and the phase misalignment which are caused between the diffracted light beam 42 and the diffracted light beam 43 at each of the plurality of wavelength components. The temporal low-coherent and substantially parallel light 131 has a short temporal coherent length, so adjustment can be performed so as to cause the phase misalignment between the respective diffracted light beams generated by diffraction by the plane grating 1 and the plane grating 2 to fall within a coherent length range of the low-coherent and substantially parallel light 131.

With the structure as described above, Embodiment 13 has an effect in that adjustment can be performed relatively easily so as to eliminate the angular misalignment and the phase misalignment which are caused between the respective diffracted light beams generated when the incident light is diffracted by the plane gratings 1 and 2 at each of the plurality of wavelength components. In addition, Embodiment 13 has an effect in that adjustment can be performed so as to cause the phase misalignment between the respective diffracted light beams generated by diffraction by the plane gratings to fall within the coherent length range of the low-coherent and substantially parallel light 131. Further, Embodiment 13 has the same effect not only in the case of the reflection plane grating but also in the case of a transmission plane grating.

Embodiment 14

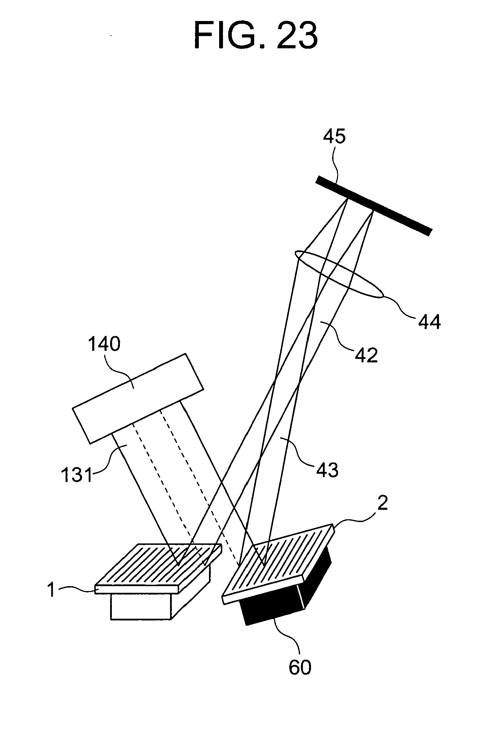

A segmented grating alignment device according to Embodiment 14 of the present invention will be described with reference to FIG. 23. FIG. 23 shows a structure of the segmented grating alignment device according to Embodiment 14 of the present invention.

In FIG. 23, the segmented grating alignment device according to Embodiment 14 includes an ultrashort pulse light source 140 for emitting light to the plane gratings 1 and 2, each of which is the alignment target, the convex lens 44 for condensing diffracted light beams, the CCD camera 45 for measuring the imaging positions of far-field images of the diffracted light beams, and the triaxial angle drive means 60. Note that not the ultrashort pulse light source 140 but a super luminescent diode (SLD) may be used as the light source for emitting temporal low-coherent and substantially parallel light 131 having the plurality of wavelength components.

Next, the operation of the segmented grating alignment device according to Embodiment 14 will be described with reference to the attached drawing.

The ultrashort pulse light source 140 emits the temporal low-coherent and substantially parallel light 131 to the plane grating 1 and the plane grating 2. The operation of each of the convex lens 44, the CCD camera 45, and the triaxial angle drive means 60 is identical to that in the case of Embodiment 4 or 6. The operation of Embodiment 14 is based on the operation of Embodiment 13.

With the structure as described above, Embodiment 14 has an effect in that the effect described in Embodiment 13 can be realized relatively easily by reducing a size and a cost of the device. In addition, Embodiment 14 has the same effect not only in the case of the reflection plane grating but also in the case of a transmission plane grating.

Embodiment 15

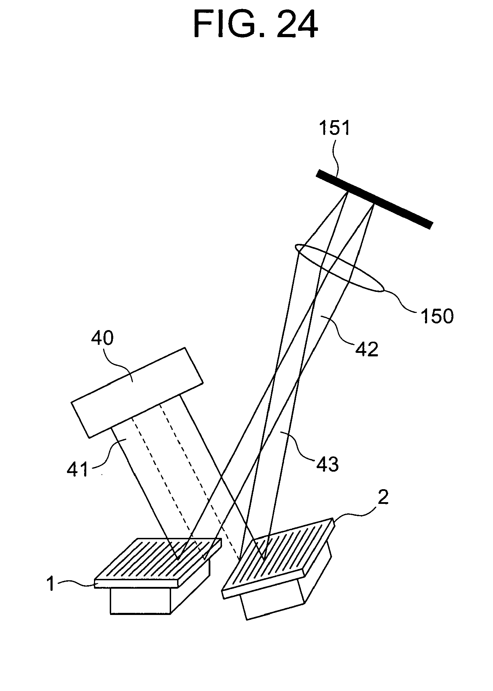

A segmented grating alignment device according to Embodiment 15 of the present invention will be described with reference to FIG. 24. FIG. 24 shows a structure of the segmented grating alignment device according to Embodiment 15 of the present invention.

In FIG. 24, the segmented grating alignment device according to Embodiment 15 includes the light emitting means 40 for emitting light to the plane gratings 1 and 2, each of which is the alignment target, a convex lens 150 for condensing diffracted light beams, and a CCD camera 151 for measuring imaging positions of far-field images of the diffracted light beams.

Next, the operation of the segmented grating alignment device according to Embodiment 15 will be described with reference to the attached drawing.

The operation of the light emitting means 40 is identical to that in the case of Embodiment 4. The convex lens 150 condenses the diffracted light beam 42 and the diffracted light beam 43. The CCD camera 151 measures the imaging position of the far-field image of the condensed diffracted light beam 42 and the imaging position of the far-field image of the condensed diffracted light beam 43.

With the structure as described above, Embodiment 15 has an effect capable of reducing a size and cost of the device to relatively easily realize the effect described above in Embodiment 4. In addition, Embodiment 15 has the same effect not only in the case of the reflection plane grating but also in the case of a transmission plane grating.

Embodiment 16

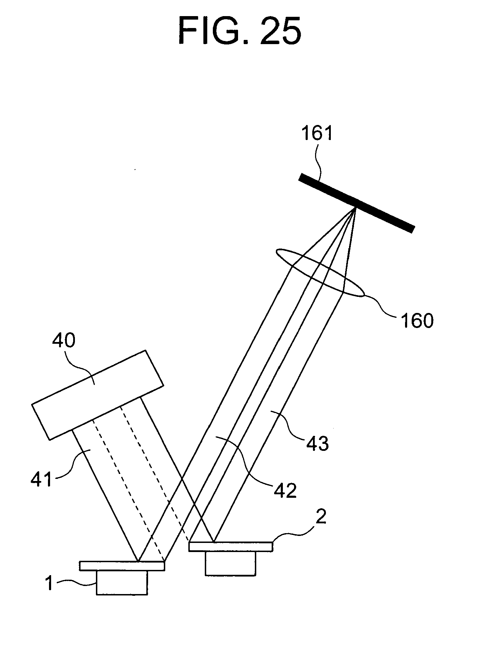

A segmented grating alignment device according to Embodiment 16 of the present invention will be described with reference to FIG. 25. FIG. 25 shows a structure of the segmented grating alignment device according to Embodiment 16 of the present invention.

In FIG. 25, the segmented grating alignment device according to Embodiment 16 includes the light emitting means 40 for emitting light to the plane gratings 1 and 2, each of which is the alignment target, a convex lens 160 for condensing diffracted light beams, and a CCD camera 161 for measuring an intensity of interference light between far-field images of the diffracted light beams.

Next, the operation of the segmented grating alignment device according to Embodiment 16 will be described with reference to the attached drawing.

The operation of the light emitting means 40 is identical to that in the case of Embodiment 4. The convex lens 160 condenses the diffracted light beam 42 and the diffracted light beam 43. The CCD camera 161 measures the intensity of the interference light between the far-field image of the condensed diffracted light beam 42 and the far-field image of the condensed diffracted light beam 43.

With the structure as described above, Embodiment 16 has an effect capable of reducing a size and cost of the device to relatively easily realize the effect described above in Embodiment 8. In addition, Embodiment 16 has the same effect not only in the case of the reflection plane grating but also in the case of a transmission plane grating.

Embodiment 17

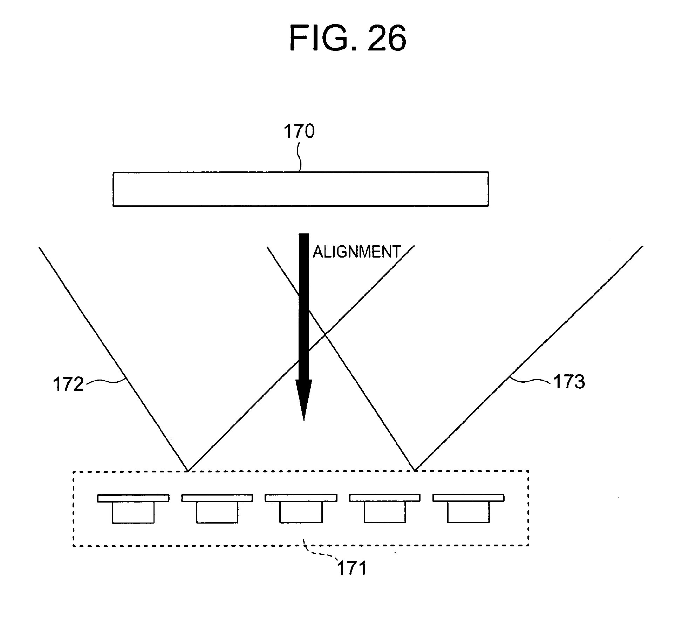

A segmented grating alignment system according to Embodiment 17 of the present invention will be described with reference to FIG. 26. FIG. 26 shows a structure of the segmented grating alignment system according to Embodiment 17 of the present invention.

In FIG. 26, the segmented grating alignment system according to Embodiment 17 includes a segmented grating alignment device 170 according to any one of Embodiments 1 to 16, for aligning a segmented grating 171 having a plurality of plane gratings.

Next, the operation of the segmented grating alignment system according to Embodiment 17 will be described with reference to the attached drawing.

The segmented grating alignment device 170 aligns the segmented grating 171 so as to eliminate an angular misalignment and a phase misalignment which are caused among respective diffracted light beams 173 generated when incident light 172 is diffracted by the plane gratings. As a result, Embodiment 17 is the same as the case where the diffracted light beams 173 which will be generated by the incident light 172 are diffracted by a large-area plane grating.

With the structure as described above, Embodiment 17 has an effect capable of providing the same performance as that of a large-area plane grating by arranging two or more small-area plane gratings.

Embodiment 18

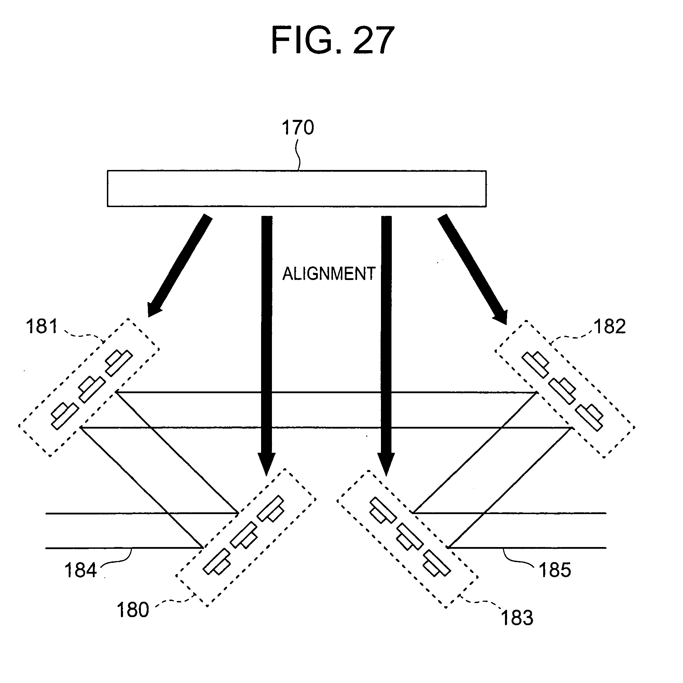

A pulse compression device according to Embodiment 18 of the present invention will be described with reference to FIG. 27. FIG. 27 shows a structure of the pulse compression device according to Embodiment 18 of the present invention.

In FIG. 27, the pulse compression device according to Embodiment 18 includes the segmented grating alignment device 170 according to any one of Embodiments 1 to 16, for aligning a segmented gratings 180 to 183, each of which having a plurality of plane gratings.

Next, the operation of the pulse compression device according to Embodiment 18 will be described with reference to the attached drawing.

The segmented grating alignment device 170 aligns the segmented grating 180 to 183 so as to eliminate an angular misalignment and a phase misalignment which are caused among respective diffracted light beams generated when incident light 184 is diffracted by the plane gratings. As a result, the segmented gratings 180 to 183 are aligned as in the case where the diffracted light beams which will be generated by the incident light 184 are diffracted by a large-area plane grating. Therefore, according to Embodiment 18, exit light 185 generated corresponding to the incident light 184 is the same as the case where a pulse compression device including a large-area plane grating is used.

With the structure as described above, Embodiment 18 has an effect capable of providing the same performance as that of the pulse compression device including the large-area plane grating by using a pulse compression device in which two or more small-area plane gratings are arranged.

## Claims

1. A segmented grating alignment device, comprising a grating alignment device for performing alignment so as to eliminate at least one of an angular misalignment and a phase misalignment which are caused between respective diffracted light beams generated when incident light is diffracted by two plane gratings.

2. A segmented grating alignment device according to claim 1, wherein the grating alignment device comprises:

   angular misalignment detecting means for detecting the angular misalignment between the respective diffracted light beams generated when the incident light is diffracted by the two plane gratings; and
   angular misalignment adjusting means for performing adjustment so as to eliminate the angular misalignment detected by the angular misalignment detecting means.

3. A segmented grating alignment device according to claim 1, wherein the grating alignment device comprises:

   phase misalignment detecting means for detecting the phase misalignment between the respective diffracted light beams generated when the incident light is diffracted by the two plane gratings; and
   phase misalignment adjusting means for performing adjustment so as to eliminate the phase misalignment detected by the phase misalignment detecting means.

4. A segmented grating alignment device according to claim 2, wherein the angular misalignment detecting means comprises:

   light emitting means for emitting light to the two plane gratings; and
   far-field image forming position measuring means for measuring imaging positions of far-field images of the respective diffracted light beams generated when the incident light emitted by the light emitting means is diffracted by the two plane gratings.

5. A segmented grating alignment device according to claim 2, wherein the angular misalignment detecting means comprises:

light emitting means for emitting light to the two plane gratings; and
wavefront measuring means for measuring wavefronts of the respective diffracted light beams generated when the incident light emitted by the light emitting means is diffracted by the two plane gratings.

6. A segmented grating alignment device according to claim 4 or 5, wherein the angular misalignment adjusting means comprises triaxial angle drive means for adjusting angles of at least one of the two plane gratings about three axes including an axis perpendicular to a diffraction surface of a plane grating, an axis perpendicular to a groove direction of the plane grating within the diffraction plane of the plane grating, and an axis parallel to the groove direction of the plane grating within the diffraction plane of the plane grating.

7. A segmented grating alignment device according to claim 4 or 5, wherein the angular misalignment adjusting means comprises biaxial angle drive means for adjusting angles of at least one of the two plane gratings about two axes including one of an axis perpendicular to a diffraction surface of a plane grating and an axis perpendicular to a groove direction of the plane grating within the diffraction plane of the plane grating, and an axis parallel to the groove direction of the plane grating within the diffraction plane of the plane grating.

8. A segmented grating alignment device according to claim 3, wherein the phase misalignment detecting means comprises:

light emitting means for emitting light to the two plane gratings; and
far-field image intensity measuring means for measuring intensities of far-field images of the respective diffracted light beams generated when the incident light emitted by the light emitting means is diffracted by the two plane gratings.

9. A segmented grating alignment device according to claim 8, wherein the phase misalignment adjusting means comprises biaxial angle drive means capable of moving positions of at least one of the two plane gratings in directions of two axes including an axis perpendicular to a diffraction surface of a plane grating and an axis perpendicular to a groove direction of the plane grating within the diffraction plane of the plane grating.

10. A segmented grating alignment device according to claim 8, wherein the phase misalignment adjusting means comprises uniaxial angle drive means capable of moving positions of at least one of the two plane gratings in a direction of one of an axis perpendicular to a diffraction surface of a plane grating and an axis perpendicular to a groove direction of the plane grating within the diffraction plane of the plane grating.

11. A segmented grating alignment system, comprising the segmented grating alignment device according to any one of claims 1 to 10, for aligning a segmented grating including a plurality of plane gratings so as to eliminate at least one of an angular misalignment and a phase misalignment which are caused between respective diffracted light beams generated when the incident light is diffracted by the plurality of plane gratings.

12. A pulse compression device, comprising the segmented grating alignment device according to any one of claims 1 to 10, for aligning a plurality of segmented gratings including a plurality of plane gratings so as to eliminate at least one of an angular misalignment and a phase misalignment which are caused between respective diffracted light beams generated when the incident light is diffracted by the plurality of plane gratings.

# FIG. 1

# FIG. 2

20

(1) DETECT ANGULAR
MISALIGNMENT

1        2

(2) TRANSFER ANGULAR
MISALIGNMENT
INFORMATION

(3) ADJUST ANGULAR
MISALIGNMENT

21

# FIG. 3

30

(1) DETECT PHASE
MISALIGNMENT

1        2

(2) TRANSFER ANGULAR
MISALIGNMENT
INFORMATION

(3) ADJUST PHASE
MISALIGNMENT

31

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

L=1050nm
L=1053nm
L=1056nm

# FIG. 17

L=1050nm
L=1053nm
L=1056nm

# FIG. 18

# FIG. 19

# FIG. 20

# FIG. 21

# FIG. 22

# FIG. 23

# FIG. 24

# FIG. 25

# FIG. 26

170

ALIGNMENT

172

173

171

# FIG. 27

170

ALIGNMENT

181

182

184

185

180

183

# FIG. 28

ANGULAR MISALIGNMENT
WITH RESPECT TO ANGLE A

X-AXIS

# FIG. 29

Y-AXIS

ANGULAR MISALIGNMENT
WITH RESPECT TO ANGLE B

# FIG. 30

Z-AXIS

ANGULAR MISALIGNMENT
WITH RESPECT TO ANGLE C

# FIG. 31

Z-AXIS

COORDINATE MISALIGNMENT
WITH RESPECT TO COORDINATE Z

# FIG. 32

X-AXIS

COORDINATE
DIFFERENCE WITH
RESPECT TO
COORDINATE X

## INTERNATIONAL SEARCH REPORT

| International application No. |
|---|
| PCT/JP2005/000484 |

A.  CLASSIFICATION OF SUBJECT MATTER
    Int.Cl⁷  G02B27/62, G02B27/42, G02B7/00

According to International Patent Classification (IPC) or to both national classification and IPC

B.  FIELDS SEARCHED

Minimum documentation searched (classification system followed by classification symbols)
    Int.Cl⁷  G02B27/62, G02B27/42, G02B5/18, G02B7/00, H01S3/00

Documentation searched other than minimum documentation to the extent that such documents are included in the fields searched
    Jitsuyo Shinan Koho          1922-1996   Jitsuyo Shinan Toroku Koho    1996-2005
    Kokai Jitsuyo Shinan Koho    1971-2005   Toroku Jitsuyo Shinan Koho    1994-2005

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 1-248583 A  (Toshiba Corp.),<br>04 October, 1989 (04.10.89),<br>Page 2, lower left column, line 8 to page 3,<br>lower left column, line 9; Figs. 1 to 3<br>(Family: none) | 1,11<br>2-10,12 |
| Y<br>A | JP 2-276283 A  (Toshiba Corp.),<br>13 November, 1990 (13.11.90),<br>Page 2, lower right column, line 3 to page 4,<br>upper left column, line 9; Figs. 1 to 6<br>(Family: none) | 1,11<br>2-10,12 |

☒  Further documents are listed in the continuation of Box C.   ☐  See patent family annex.

| | |
|---|---|
| *  Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    19 April, 2005 (19.04.05) | Date of mailing of the international search report<br>    24 May, 2005 (24.05.05) |
|---|---|
| Name and mailing address of the ISA/<br>    Japanese Patent Office | Authorized officer |
| Facsimile No. | Telephone No. |

Form PCT/ISA/210 (second sheet) (January 2004)

<div align="center">**INTERNATIONAL SEARCH REPORT**</div>

| International application No. |
|---|
| PCT/JP2005/000484 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2004-145334 A  (Hewlett-Packard Development Co., L.P.), 20 May, 2004 (20.05.04), Claims; Figs. 1 to 8 & EP 1413543 A1 Claims; Figs. 1 to 8 & US 6747785 B2 | 1-12 |
| A | JP 2004-280116 A  (Lucent Technologies Inc.), 07 October, 2004 (07.10.04), Claims; Figs. 1 to 3 & US 6757113 B1 Claims; Figs. 1 to 3 | 1-12 |
| A | JP 2003-255206 A  (Ando Electric Co., Ltd.), 10 September, 2003 (10.09.03), Claims; Figs. 1 to 3 & US 2003/169551 A1 Claims; Figs. 1 to 3 | 1-12 |
| A | JP 1-233416 A  (Nippon Telegraph And Telephone Corp.), 19 September, 1989 (19.09.89), Claims; Figs. 1 to 7 (Family: none) | 1-12 |
| A | JP 11-298076 A  (Advantest Corp.), 29 October, 1999 (29.10.99), Par. Nos. [0011] to [0015]; Figs. 1 to 7 (Family: none) | 1-12 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **CHRISTOPHER PALMER.** Diffraction Gating Handbook. Spectra Physics Richardson Grating Laboratory, February 2002, 151-153